# EUROPEAN PATENT APPLICATION

(11) **EP 1 841 173 A2**
(43) Date of publication of application: **03.10.2007**
(21) Application number: 07006318.5
(22) Date of filing: 27.03.2007
(51) Int. Cl.: H04L 29/06

(54) **Data communication method and system**

(30) Priority: 30.03.2006 JP 2006092770
(71) Applicant: Hitachi, Ltd., Chiyoda-ku Tokyo 100-8220 (JP)
(72) Inventor: Kaji, Tadashi, c/o Hitachi, Ltd., Chiyoda-ku, Tokyo 100-8220 (JP); Hoshina, Kazuyoshi, c/o Hitachi, Ltd., Chiyoda-ku, Tokyo 100-8220 (JP); Takeushi, Keisuke, c/o Hitachi, Ltd., Chiyoda-ku, Tokyo 100-8220 (JP); Takata, Osamu, c/o Hitachi, Ltd., Chiyoda-ku, Tokyo 100-8220 (JP); Fujishiro, Takahiro, c/o Hitachi, Ltd., Chiyoda-ku, Tokyo 100-8220 (JP); Yato, Akifumi, c/o Hitachi, Ltd., Chiyoda-ku, Tokyo 100-8220 (JP)
(74) Representative: Strehl Schübel-Hopf & Partner

(57) **Abstract**

An encrypted communication method, and a system for the method, can transfer a session control message (PR) designated by identification information (65) inherent to an application to a connection destination through a session management server. When an application program of a client (CL) or encrypted communication software issues a connection request in the form designating an application server (SV) by identification information (65) inherent to each application, the identification information is automatically changed to a desired address-of-record (AOR) capable of domain identification and a transfer destination domain of a reception message is judged.

## Description

### BACKGROUND OF THE INVENTION

This invention relates to a data communication method and a data communication system. More particularly, the invention relates to a data communication method, and a system for the method, that make it possible to execute encryption data communication between a client apparatus and a server apparatus by utilizing a session management server apparatus.

In an encrypted communication method through a network, a client apparatus (which indicates a terminal device and is called "client") and a server apparatus (called "server") mutually execute an authentication procedure and exchange encryption parameters used for the communication when authentication of the counterpart apparatus proves successful, to prevent mutual communication with an unintentional counterpart. A public key certificate is applied to authenticate the communication peer in IPsec (Internet Protocol Security) described in RFC2401 (IETF, RFC2401: Security Architecture for the Internet Protocol, <URL: http://www.ietf.org/rfc/rfc2401.txt> (called "document 1") of IETF (Internet Engineering Task Force).

In the authentication using the public key certificate, it is necessary to somehow verify that the public key certificate submitted by the communication peer is issued by a reliable certification authority. According to one of the certificate validation methods, the communication peer acquires in advance by any means a reliable CA certificate of the certification authority for certifying the certification authority issuing the certificate and submitted by the communication peer, and the signature of the certification authority put to the pubic key certificate submitted by the communication peer is verified by using the public key contained in the CA certificate. According to this certificate validation method, it is necessary for the server and the client to prepare in advance the certificate of the certification authority issuing each public key certificate in such a fashion as to correspond to the public key certificates of all the communication equipment that may become the communication object.

For example, a system will be hereby assumed in which each of a plurality of clients CL1, CL2, CL3 has a secret key SK1, SK2, SK3 and a public key certificate PK1, PK2, PK3 issued by different issuing certification authorities (CA1, CA2, CA3) and each of servers SV1, SV2, SV3 also has a secret key SK11, SK12, SK13 and a public key certificate PK11, PK12, PK13 issued by different issuing certification authorities (CA1, CA2, CA3). In order to allow each client to communicate at all times with a plurality of servers SV1, SV2 and SV3, it is necessary for each server to keep in advance a plurality of CA certificates RT1, RT2 and RT3 in such a fashion as to correspond to the issuing certification authorities (CA1, CA2, CA3) of the public key certificates (PK1, PK2, PK3) of all the client apparatuses CL1, CL2 and CL3. Similarly, each client must keep in advance a plurality of CA certificates RT1, RT2 and RT3 in such a fashion as to correspond to the issuing certification authorities (CA1, CA2, CA3) of the public key certificates (PK11, PK12, PK13) of the servers SV1, SV2, SV3 as the communication peers. In this system configuration, each client and each server must repeat the authentication processing whenever the communication peer is changed.

The software the client keeps to execute encrypted communication by IPsec described in RFC2401 includes a network interface card (NIC) portion 20, an encrypted communication function portion 30 of a TCP/IP layer, an application 40, and a key management process 50 as a software portion for a key management (IKE: Internet Key Exchange) process described in RFC2409 (IETF, RFC2409: The Internet Key Exchange (IKE) <URL: http://www.ietf.org/rfc/rfc2409.txt> (called "document 2"). A cipher engine 31 of the encrypted communication function portion 30 is installed as a part of the software of the encrypted communication function portion 30 and includes an SPDB (Security Policy Data Base) 32 storing security policy information (SP information) as to whether or not encryption is applied to a transmission packet and an SADB (Security Association Data Base) 33 storing information (SA (Security Association) information) such as an encryption system and a cipher key applied to encrypted communication.

The server as the communication peer of the client has similar software as described above so that the application layers of the client and the server and key management processes can communicate with one another.

Detecting the transmission request of the IP packet issued by the program of the application layer 40, the cipher engine 31 verifies the header portion of the IP packet by the SPDB 32 and judges whether or not the IPsec is to be applied to this IP packet. Judging that the IPsec is to be applied to the IP packet, the cipher engine 31 acquires SA information to be applied to the IP packet from the SADB 33. Here, if the SA information corresponding to the IP packet is not registered to the SADB 33, the cipher engine 31 requires the IKE (key management) process 50 to exchange the SA information containing the cipher key with the communication peer (application server).

The key management process 50 exchanges the SA information with the communication peer in accordance with the document 2. The document 2 teaches to execute the authentication procedure for confirming whether or not the communication peer is an authentic apparatus to which communication is permitted. Confirming that the counterpart apparatus is the authentic apparatus permitted to execute the encrypted communication by the authentication procedure, the key management process 50 starts exchanging the SA information with the counterpart apparatus through the encrypted communication line. After completing the exchange of the SA information with the communication peer, the key management process 50 reports SA information and SP (Security Policy) information corresponding to the SA information to the cipher engine 31.

The cipher engine 31 saves the SP information and the SA information reported from the key management process 50 in the SPDB 32 and the SADB 33, respectively, encrypts the IP packet in accordance with the SA information and transmits the encrypted IP packet to the communication peer. Receiving the encrypted IP packet, the server as the communication peer decodes the IP packet received in accordance with the SA information agreed by the key management process and reports the reception of the IP packet to the server side application layer.

On the other hand, RFC3261 (IETF, RFC3261: SIP: Session Initiation Protocol, <URL:
http:www.ietf.org/rfc/rfc3261.txt>, called "document 3") describes a method of executing encrypted communication between a client (user agent client) and
an SIP (Session Initiation Protocol) proxy apparatus (called "SIP proxy") and between the SIP proxy and a server (user agent server) by conducting mutual authentication between the client and the SIP proxy and
between the SIP proxy and the server. According to an SIP model of RFC3261, it is difficult for apparatuses other than the client, the server and the SIP proxy to tap the communication content between the client and
the server because the client and the server are confirmed as the authentic communication peers by the SIP proxy, respectively, and because the encrypted SIP message is transmitted and received between the client and the server.

Incidentally, the SIP proxy is a server that executes processing such as relaying of the SIP message transmitted from a certain client to another client, authentication of the user for providing a service, confirmation of user's right, and so forth. In the framework of the SIP, functions of registering a network address (IP address) representing the present position of the client on the network and updating it are stipulated to relay the SIP message. A server for processing a registration request of the network identifier from the client and an updating request is called "registrar".

The SIP is a text-base protocol and the SIP message includes a header portion and a message body portion presenting the session content.

### SUMMARY OF THE INVENTION

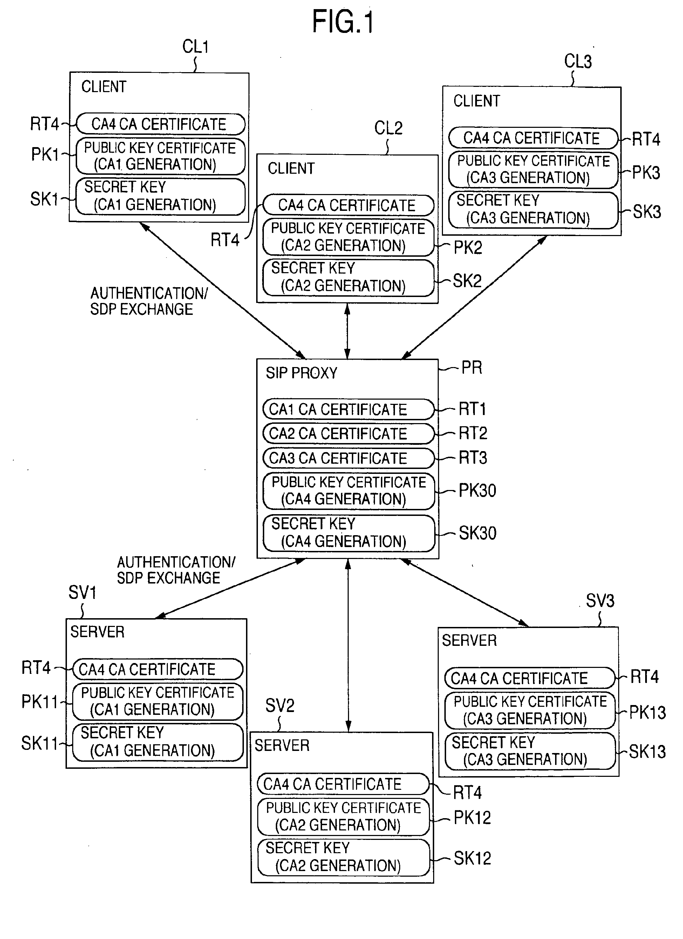

Fig. 1 shows an example of the authentication system to which the SIP proxy described above is applied. Symbol PR represents the SIP proxy connected to a plurality of clients CL1, CL2, CL3 and a plurality of servers SV1, SV2, SV3. The SIP proxy PR uses a secret key SK30 issued by an certification authority CA4 and a public key certificate PK30 and keeps in advance a plurality of CA certificates RT1, RT2, RT3 corresponding to issuing certification authorities (CA1, CA2, CA3) of the public key certificates used by the servers SV1, SV2, SV3 to authenticate these servers.

In the authentication system that applies the SIP proxy, each server and each client may well keep a CA certificate RT4 corresponding to the issuing certification authority of the public key certificate PK3 used by the SIP proxy PR, as the CA certificate for authenticating the communication peer as shown in Fig. 1. When the connection destination is changed to another server after each client communicates with one server through the SIP proxy PR, the client can communicate with the SIP proxy by using the encrypted communication path that has already been constituted. Therefore, each client can start the encrypted communication with a new communication peer by merely changing encryption parameters. In other words, in the authentication system applying the SIP proxy, there can be acquired the advantage that a new authentication processing need not be executed by each client whenever the connection counterpart server is changed.

In the framework of the SIP, however, a session management server (also called "SIP server" in the framework of SIP) having the SIP proxy function decides the transfer destination of the reception SIP message by an address-of-record (SIP-URI) having "user name@domain name" called "AOR". Therefore, in the network system based on session setting through the session management sever such as the SIP proxy described above, the application executed on the client must use an SIP-URI (Uniform Resource Identifier) capable of specifying the belonging domain of the server as the identifier for designating the application server.

More specifically, in the framework of the SIP, the client side generates a connection request SIP message describing the SIP-URI of the AOR form designating the application server as the Request-URI contained in the start line and transmits an IP packet containing this SIP message in a payload to the SIP proxy positioned in the belonging domain of the client. Receiving this IP packet, the SIP proxy executes Record retrieval and SRV Record retrieval of a DNS (Domain Name System), for example, on the basis of the domain name indicated by the AOR described as the Request-URI and specifies the IP address or FQDN (Full Qualified Domain Name) of the SIP proxy (transfer destination SIP proxy) positioned in other domain to which the transfer destination server of the reception message belongs. When the result of the SRV Record retrieval indicates FQDN, A-Record retrieval of DNS is executed and in this way, the IP address of the transfer destination SIP proxy can be acquired.

Here, when the belonging domain of the application server is the same as the belonging domain of the SIP proxy that received the SIP message, the SIP proxy acquires the IP address (or FQDN) of the application server from the location service DB (database) by using the SIP-URI described in the Request-URI of the reception message as the retrieval key and transfers this SIP message as the destination address of the IP packet to the application server. When the belonging domain of the application server is different from the belonging domain of the SIP proxy (or transmitting client), the SIP message is transferred to a different SIP proxy positioned in the belonging domain of the application server and the SIP proxy of the transfer destination acquires the IP address or FQDN of the application server from the location service DB and transfers the SIP message to the application server.

In the network based on the session setting through the session management server (SIP proxy) described above, the session management server judges the domain to which the application server belongs from the address-of-record (SIP-URI) contained in the SIP message received and transfers the reception message to the application server or the connection destination session management server.

However, the ordinary application program executed on the client terminal connected to the IP network uses an identifier representing the application server such as the IP address or an identifier of a framework different from the SIP-URI for designating the application server even when the domain name such as the URL is contained, instead of the identifier in the SIP framework such as the SIP-URI of the AOR form described above.

When the application program or the encrypted communication software issues the connection request with the server by designating the application server by the IP address or the URL and when the client transmits the connection request SIP message in the form designated by the IP address or the URL, the session management server (SIP proxy) cannot specify the transfer destination domain of the connection request message received. In this case, there develops the problem that the client cannot enjoy the advantage of the authentication system shown in Fig. 1.

The invention provides a data communication method, and a system for the method, that can transfer a session control message designating a connection destination apparatus by an identifier used by an application for identifying a communication peer (hereinafter called "service identifier", too) such as an IP address or URL and different from an identifier employed by a session management server.

The invention provides also a data communication method, and a system for the method, that can transfer a connection request from a client designating an application server by a service identifier to the application server through a session management server.

The invention further provides a data communication method, and a system for the method, that can conduct encrypted data communication between a client and a server and can make easy an authentication procedure between the client and the server that becomes necessary prior to the start of the encrypted data communication.

More concretely, the invention arranges a domain management table for managing a management server to be inquired for acquiring an address-of-record from a service identifier as a management domain of the service identifier when a plurality of identification information management servers manages service identifiers about mutually different address-of-records. When a client issues a connection request designating an application server by a service identifier, a first management server that received the request from the client retrieves the domain management table and finds out the management domain of the service identifier and a second management server of the management domain converts the service identifier to the address-of-record.

For example, the invention relates to a data communication method between a client and an application server in a communication system including a communication network having a plurality of domains, management servers for managing respective domains, and clients and application servers connected to mutually different domains, which method comprises the first step in which the client designates a service identifier and inquires an address-of-record of the application server to which the service identifier is allocated which address-of-record contains a belonging domain name, to a first management server managing the domain to which the client belongs; the second step in which the first management server receiving the query from the client acquires the belonging domain name of the application server from the domain management table managing the mapping between the service identifier and its belonging domain, designates a service identifier of the application server to a second management server managing the belonging domain and inquires an address-of-record allocated to the application server and containing the belonging domain name of the application server; the third step in which the second management server acquires an address-of-record corresponding to the service identifier of the application server from an identification information management table managing the mapping between the service identifier and the address-of-record, and reporting the address-of-record to the client; the fourth step in which the client transmits a connection request message containing the address-of-record of the application server acquired to the first management server; and the fifth step in which the first management server judges a transmission destination of the connection request message received on the basis of the domain name contained in the address-of-record described in the connection request message received, and transfers the connection request message to the application server or the second management server managing the belonging domain of the application server.

Explanation will be given in further detail. The data communication method according to the invention further includes the sixth step in which the application server returns a connection response message containing parameter information necessary for encrypted communication to the requesting client through the management server in response to the reception of the connection request message; and the seventh step in which a message encrypted in accordance with the parameter information designated by the connection response message is made between the client and the application server.

The management server may be a session management server for managing a communication session of a domain to which the client or the application server belongs or an identification information management server for managing identification information of a domain to which the client or the application server belongs.

When the session management server is the management server described above, a data communication method between a client and a server according to the invention includes the first step in which the client transmits an AOR acquisition request message for inquiring an address-of-record containing a belonging domain name allocated to the application server to a first session management server by designating a service identifier of the application server; the second step in which the first session management server acquires the service identifier and the management domain of the service identifier from the domain management table and transfers the AOR acquisition request message to a second session management server belonging to the management domain; the third step in which the second session management server acquires an address-of-record corresponding to the service identifier of the application server from a location table that manages a mapping between a service identifier and an address-of-record and transmits the AOR acquisition response message containing the address-of-record to the client; the fourth step in which the client transmits a connection request message designated by the address-of-record of the application server to the session management server; and the fifth step in which the first session management server judges the transfer destination of the reception message on the basis of the domain name contained in the address-of-record described in the connection request message received and transmits the reception message to the application server or another session management server managing the belonging domain of the application server.

Explanation will be given in further detail. The data communication method further includes the sixth step in which the second session management server transmits parameter information necessary for the encrypted communication to an application server in response to the reception of the connection request message; the seventh step in which the first session management server transmits parameter information necessary for encrypted communication to the client; and the eighth step in which a packet containing a message encrypted in accordance with the parameter information designated by the connection response message is communicated between the client and the application server.

When the identification information management server is the management server described above, a data communication method between a client and a server according to the invention includes the first step in which the client transmits a first AOR acquisition request message for inquiring an address-of-record containing a belonging domain name allocated to the application server to a first session management server by designating a service identifier of the application server; the second step in which the first identification information management server acquires a management domain of the service identifier from the domain management table and generates and transmits a second AOR acquisition request message for inquiring the an address-of-record of a service identifier contained in the first AOR acquisition message to the second identification information management server belonging to the management domain; the third step in which the second identification information management server acquires an address-of-record corresponding to the service identifier of the application server and transmits a first AOR acquisition response message containing the address-of-record to the first identification information management server; the fourth step in which the first identification information management server transmits a second AOR acquisition response message containing the address-of-record and generated on the basis of the description content of the first AOR acquisition response message to the client; the fifth step in which the client transmits a first connection request message containing the address-of-record of the application server to the first identification information management server; and the sixth step in which the first session management server judges the transmission destination of the message on the basis of the domain name contained in the address-of-record described in the first connection request message received, and transmits the second connection request message generated on the basis of the description content of the first connection request message to the application server or the second identification information management server existing in the belonging domain of the application server.

Further specifically, the data communication method described above includes the seventh step in which the second session management server transmits parameter information necessary for encrypted communication to the application server; the eighth step in which the first session management server transmits parameter information necessary for encryption information to the client; and ninth step in which a packet containing a message encrypted in accordance with the parameter information designated by the connection response message is communicated between the client and the application server.

The data communication method described above further includes the tenth step in which the client transmits a first cutoff start request message representing that the client starts a cutoff processing to the first identification information management server when the client finishes the data communication; and the eleventh step in which a second cutoff start request message generated on the basis of the description content of the first cutoff start request message is transmitted to the application server or the second identification information management server existing in the belonging domain of the application server.

The session management server is constituted by an SIP (Session Initiation Protocol) server, for example. In this case, the communication message between the client and the session management server is encrypted by a TLS (Transport Layer Security) prescribed in RFC3261, for example, and the communication data between the client and the application server is encrypted by an IPsec (Internet Protocol Security) prescribed in RFC2401, for example. Needless to say, the encryption protocol is not particularly limited to those described above.

A management server provided by the invention is a management server for managing each domain, and has, in a communication network constituted by a plurality of domains, a domain management table for communicating with the client and the server and for managing a mapping between a service identifier and its belonging domain; wherein the management server acquires a belonging domain name of an application server from the domain management table when receiving from the client a query of an address-of-record containing a belonging domain name of the application server to which the service identifier is allocated, by designating a service identifier; inquires an address-of-record containing a belonging domain name of the application server allocated to the application server to other management server by designating a service identifier of the application server; acquires the address-of-record of the application server inquired, from the other management server; reports the address-of-record acquired to the client, judges a transmission destination of the connection request message received on the basis of the domain name contained in the address-of-record described in the connection request message received when receiving the connection request message containing the address-of-record of the application server reported; and transferring the connection request message to the application server or other management server managing the belonging domain of the application server.

According to the embodiment described above, the request resource of the connection request message can be automatically changed from the service identifier to an address-of-record capable of domain identification even when the connection request is issued from the application program of the client or the encrypted communication software in the form in which the request resource (connection destination server) is designated by the service identifier. Therefore, in the session management server for executing the transfer control of the connection request message, it becomes possible to judge the transfer destination domain from the address-of-record of the reception message and to transfer the reception message to the application server or a different session management server positioned in the belonging domain of the application server.

According to the embodiment described above, even a client executing an ordinary application program can easily accomplish encrypted communication with the application server by utilizing an authentication function of the session management server.

According to the embodiment described above, management can be made by an identification information management server that is different for each management domain of the service identifier. Therefore, even when the number of clients becomes great, deterioration of performance can be prevented by dividing the management domain.

According to the invention, it becomes possible to transfer the session control message designated by identification information inherent to the application to the connection destination through the session management server and to eliminate the necessity of each client to execute afresh an authentication processing whenever the application server is changed.

These and other benefits are described throughout the present specification. A further understanding of the nature and advantages of the invention may be realized by reference to the remaining portions of the specification and the attached drawings.

### BRIEF DESCRIPTION OF THE DRAWINGS

Fig. 1 is an explanatory view for explaining an authentication system to which an SIP proxy is applied.
Fig. 2 is a diagram exemplarily showing a network construction inclusive of a session management server (SIP server) in an embodiment of the invention.
Fig. 3 is a table exemplarily showing a location service table provided to the location server SL.
Fig. 4 is block diagram exemplarily showing a hardware construction of the SIP proxy PRa shown in Fig. 2.
Fig. 5 is a view exemplarily showing a basic software construction of the client CL1a shown in Fig. 2.
Fig. 6 is a view exemplarily showing a basic software construction of the server SV1b shown in Fig. 2.
Fig. 7 is a view exemplarily showing a basic software construction of the SIP proxy PRa shown in Fig. 2.
Fig. 8 is a view exemplarily showing a basic software construction of the registrar RGa shown in Fig. 2.
Fig. 9 is a view exemplarily showing a sequence of encrypted communication in the first embodiment (No. 1).
Fig. 10 is a view exemplarily showing a sequence of encrypted communication in the first embodiment (No. 2).
Fig. 11 is a view exemplarily showing a format of a location registration request message M1 and a location registration response message M2 in Fig. 9.
Fig. 12 is a view exemplarily showing a format of a location AOR acquisition request message M3 and a location acquisition response message M4 in Fig. 9.
Fig. 13 is a view exemplarily showing a format of a body portion M5-2 of a connection request message M5.
Fig. 14 is a view exemplarily showing a format of a body portion M10-2 of a connection request message M10.
Fig. 15 is a flowchart exemplarily showing a control operation executed by an encrypted communication control portion 51C of the client CL1a.
Fig. 16 is a flowchart exemplarily showing a control operation executed by an SIP message processing portion 53C of the client CL1a when the body portion of the connection request message is received.
Fig. 17 is a flowchart exemplarily showing a control operation executed by an SIP message processing portion 53R of the registrar RGa when AOR acquisition request message is received.
Fig. 18 is a flowchart exemplarily showing a control operation executed by an SIP message processing portion 53C of the SIP message processing portion 53P when the connection request message is received.
Fig. 19 is a flowchart exemplarily showing a control operation executed by an SIP message processing portion 53S of the server SV1b when the connection request message is received.
Fig. 20 is a flowchart exemplarily showing a control operation executed by an encrypted communication control portion 51S of the server SV1b when the body portion of the connection request message is received.
Fig. 21 is a flowchart exemplarily showing a control operation executed by an encrypted communication control portion 53C of the client CL1a when a key erasure request is received.
Fig. 22 is a flowchart exemplarily showing a control operation executed by an SIP message processing portion 53C of the client CL1a when a termination processing request is received.
Fig. 23 is a flowchart exemplarily showing a control operation executed by an SIP message processing portion 53P of the SIP proxy PRa when a termination request message is received.
Fig. 24 is a flowchart exemplarily showing a control operation executed by an SIP message processing portion 53S of the server SV1b when a termination request message is received.
Fig. 25 is a flowchart exemplarily showing a control operation executed by an encrypted communication control portion 51S of the server SV1b when an occurrence report of a termination request is received.
Fig. 26 is a block diagram exemplarily showing a network construction of the second embodiment.
Fig. 27 is a diagram exemplarily showing a sequence for explaining the second embodiment.
Fig. 28 is a diagram exemplarily showing a format of an identification information registration request message M101 and an identification information registration response message M103 in Fig. 27.
Fig. 29 is a block diagram exemplarily showing a basic software construction of an identification information management server ISV.
Fig. 30 is a diagram exemplarily showing a format of an AOR acquisition request message M105 and an AOR acquisition response message M107 in Fig. 27.
Fig. 31 is a block diagram exemplarily showing a network construction of the third and fourth embodiments.
Fig. 32 is a diagram exemplarily showing a sequence of encrypted communication the third embodiment.
Fig. 33 is a view exemplarily showing a construction of location management table 60, an identification information management table 64 and a domain management table 8 in the third embodiment.
Fig. 34 is a diagram exemplarily showing a communication start processing sequence in the fourth embodiment.
Fig. 35 is a block diagram exemplarily showing a basic software construction of the domain management server DSV.
Fig. 36 is a flowchart exemplarily showing an operation when the SIP server SIP receives an AOR acquisition request message in the third embodiment.
Fig. 37 is a flowchart exemplarily showing an operation when an identification information management server ISV receives an AOR acquisition request message in the third embodiment.
Fig. 38 is a flowchart exemplarily showing a format of an AOR acquisition message M401 and an AOR acquisition response message M404 in the fourth embodiment.
Fig. 39 is a flowchart exemplarily showing a format of a connection request message M405 and a connection response message M408 in the fourth embodiment.
Fig. 40 is a flowchart exemplarily showing a format of a cutoff start request message M411 and a cutoff start response message M414 in the fourth embodiment.
Fig. 41 is a diagram exemplarily showing a sequence for explaining a cutoff processing of communication in the third embodiment.
Fig. 42 is a flowchart exemplarily showing an operation when the identification information management server ISV receives an AOR acquisition request message in the fourth embodiment of the invention.
Fig. 43 is a flowchart exemplarily showing an operation when the identification information management server ISV receives a connection request message in the fourth embodiment of the invention.
Fig. 44 is a flowchart exemplarily showing an operation when the identification information management server ISV receives a cutoff start request message in the fourth embodiment of the invention.
Fig. 45 is a flowchart exemplarily showing a control operation executed by an SIP message processing portion 53C of the client CL1a when the termination processing request is received.
Fig. 46 is a flowchart exemplarily showing a control operation executed by a domain management server DSV when a domain retrieval request is received.

### DETAILED DESCRIPTION OF THE EMBODIMENTS

Embodiments of the invention will be hereinafter explained with reference to the drawings.

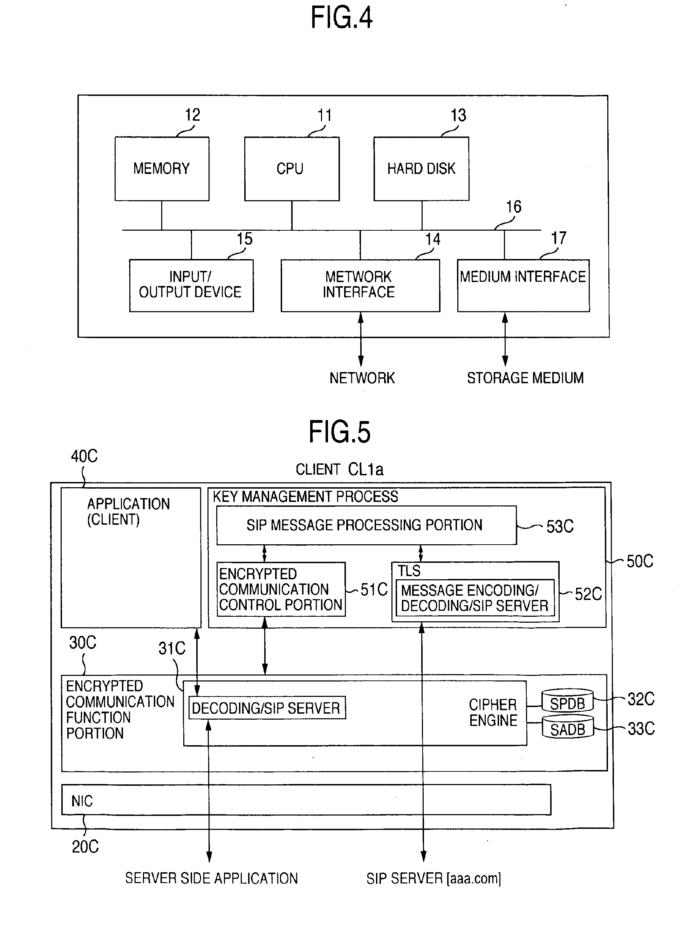

Each apparatus in each of the following embodiments is accomplished by and on an ordinary electronic computer that includes a processor (CPU) 11, a memory 12 and/or a hard disk 13 for saving various kinds of software (programs) and data executed by the processor 11, a network interface 14 for connection with a network NW1 (NW2), and an input/output device 15 including an input device such as a mouse and a keyboard, a display device and a write device of an external storage medium as shown by a structural example of Fig. 4, and these constituent elements are connected to one another through an external communication line (bus)16.

A processing portion provided to each apparatus in the following embodiments and its processing are accomplished as the processor 11 executes at a necessary timing a necessary program stored in the hard disk 13 or the memory 12 in each apparatus. These programs may be in advance stored in the hard disk 13 or the memory 12 of each apparatus or may be introduced into the storage portion from other apparatus through a medium that the apparatus can utilize, whenever necessary. The term "medium" represents a storage medium that can be utilized by, and can be fitted and removed to and from, the input/output device 15, or a communication medium utilizable through the network interface 14 (that is, network or carrier waves and digital signals propagating through the network) for example. Each of the processing portions described above may be constituted into hardware such as an integrated circuit.

Domain names and identifiers such as URL, URI, IP addresses, etc, that will be used in the following embodiments are assumptive and are used merely for the purpose of explanation. Therefore, they have no relation at all with realistic domain names or identifiers even when they do exist.

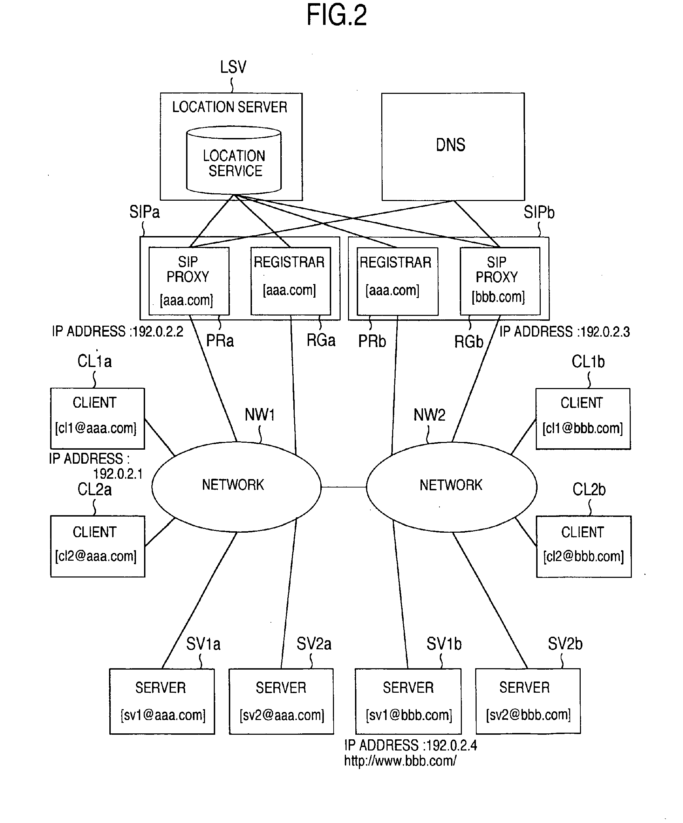

Fig. 2 shows an example of a system construction to which the invention is applied.

The network hereby illustrated includes a first network NW1 for forming a first domain managed by an SIP server apparatus (hereinafter called "SIP server") SIPa, a second network NW2 for forming a second domain managed by an SIP server apparatus (hereinafter called "SIP server") SIPb, a location server apparatus (hereinafter called "location server") LSV and a DNS (Domain Name System) apparatus (hereinafter called "DNS").

Clients CL1a and CL2a and servers SV1a and SV2a are connected to the first network NW1 and client CL1b and CL2b and servers SV1b and SV2b are connected to the second network NW2. The SIP server SIPa includes an SIP proxy PRa and a registrar PGa and the SIP server SIPb includes an SIP proxy PRb and a registrar PGb. The SIP proxies PRa, PRb and the registrars PGa and PGb may be mutually independent, respectively, or may be processing portions contained in the SIP servers SIPa and SIPb.

The character string annexed to each client and each server and put in a parenthesis represents the value of SIP-URI of an AOR (Address-of-Record) form as a transfer destination identifier (address-of-record) of the SIP message. The AOR containing a domain identifier "aaa.com" of the SIP server SIPa is allocated to the client and the server that are connected to the first network NW1 and the AOR containing a domain identifier "bbb.com" of the SIP server SIPb is allocated to the client and the server that are connected to the second network NW2.

When receiving the SIP message that designates the application server by the URL from the client under control of each of SIP servers SIPa and SIPb, the server requires the location server LSV to retrieve (retrieval of location data) of the AOR (address-of-record) corresponding to the connection destination URL. When receiving the SIP message that designates the application server by the AOR from other SIP servers, each server requires the location server LSV to retrieve an IP address corresponding to the communication peer's AOR.

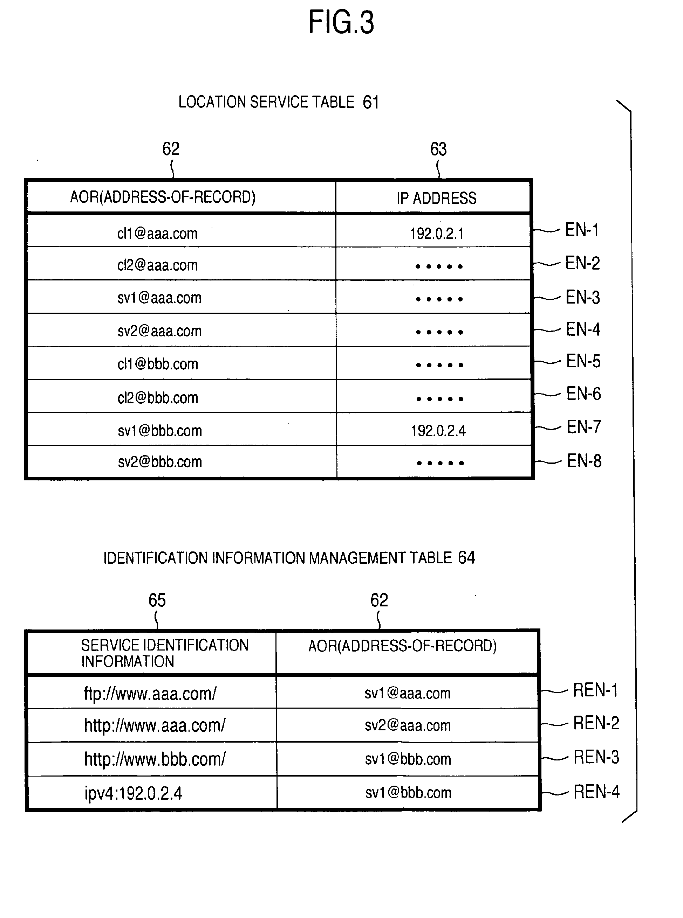

As shown in Fig. 3, for example, the location server SV stores in a location service database (DB) a location service table 61 containing a plurality of entries EN-1, EN-2 and so forth each of which corresponds to the client and the server under control of the SIP server SIPa, SIPb and represents the corresponding relation between the AOR 62 as the service identifier for identifying the apparatus of the communication peer such as the client or the server and the network address such as the IP address (hereinafter called "IP address").

The location server SV has service identification information 65 including a plurality of entries REN-1, REN-2 and so forth each of which corresponds to the client and the server under control of the SIP server SIPa and SIPb and which is an identifier used for the application program and encrypted communication software to identify the service provided by the communication peer apparatus and an identification information management table 64.

When receiving the location data retrieval request for which AOR is designated as a retrieval key from the SIP server, the location server LSV retrieves the IP address corresponding to this AOR from the location service table 61 and returns the retrieval result to the requesting SIP server.

When receiving the location data retrieval request for which service identification information 65 containing the service identifier such as the URL is designated as a retrieval key from the SIP server, the location server LSV similarly retrieves the AOR corresponding to this service identification information 65 from the identification information management table 64 and returns the retrieval result to the requesting SIP server.

Incidentally, the URL, the URI and the IP address can be used for the service identification information 65 in this embodiment. The service identification information 65 is not particularly limited to these URL, etc, and may be those kinds of information which are independently allocated to the respective apparatuses and can be identified from one another. When the IP address is used, a prefix such as "ipv4:" or "ipv6:" is preferably put to easily identify the IP address from the URL and the URI.

The first embodiment of the invention will be hereinafter explained about the communication procedure in which a client CL1a belonging to the first domain shown in Fig. 2 executes encryption data communication with the server SV1b belonging to the second domain by way of example.

Fig. 5 shows an example of the basic software construction of the client CL1a. Other clients CL1b to CL2b can take a similar software construction. The software of the client CL1a includes a network interface card portion (NIC) 20C, an encrypted communication function portion 30C containing a cipher engine 31C having an encoding/decoding function, an application program 40C and a key management process portion 50C. The first embodiment has its feature in that the key management process portion 50 includes an encrypted communication control portion 51C, a TLS (Transport Layer Security) portion 52C and an SIP message processing portion 53C.

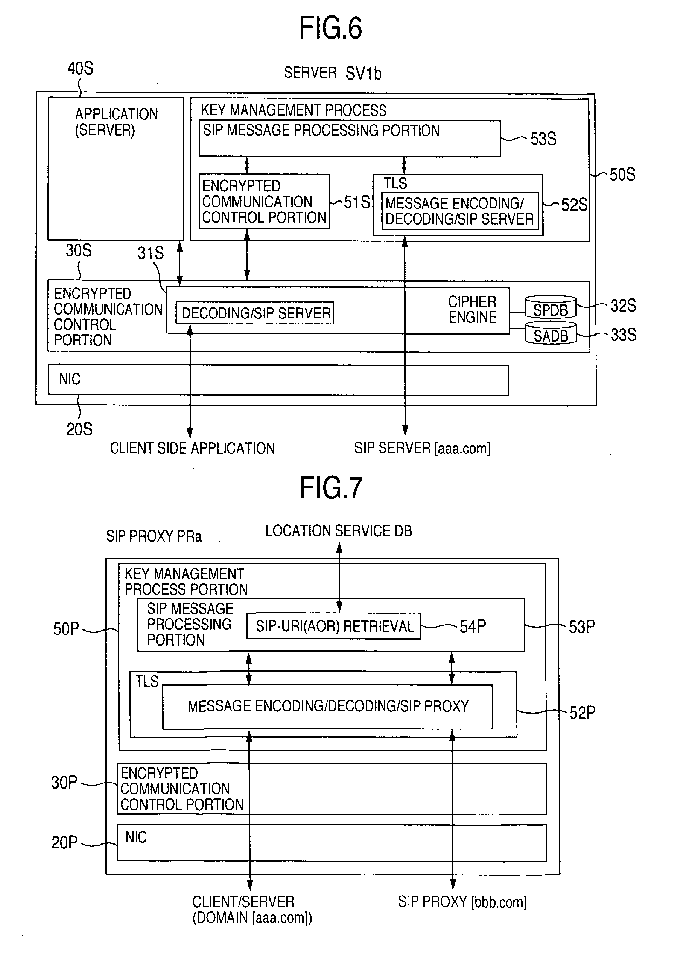

Fig. 6 shows an example of the basic software construction of the server V1b. Other servers SV1a, SV2a, SV2b can take a similar software construction. The software of the server SV1b includes a network interface card portion (NIC) 20S, an encrypted communication function portion 30S containing a cipher engine 31S having an IPsec encoding/decoding function, an application program 40S and a key management process portion 50S. The key management process portion 50S includes an encrypted communication control portion 51S, a TLS portion 52S and an SIP message processing portion 53C.

In this embodiment, the application program 40C of the client CL1a and the application program 40S of the server SV1b communicate encryption data by IPsec by utilizing the IPsec encoding/decoding function of the cipher engines 31C and 31S provided to them, respectively. On the other hand, the SIP message processing portion 53C of the client CL1a and the SIP message processing portion of a later-appearing SIP server SIPa (SIP proxy PRa, registrar RGa) by utilizing the message encoding/decoding function of the TLS portions provided to them, respectively. Similarly, the SIP message processing portion 53S of the server SV1b and the SIP message processing portion of the SIP server SIPa (SIP proxy PRa, registrar RGa) communicate the encryption SIP message by utilizing the message encoding/decoding function of the TLS portions provided to them, respectively.

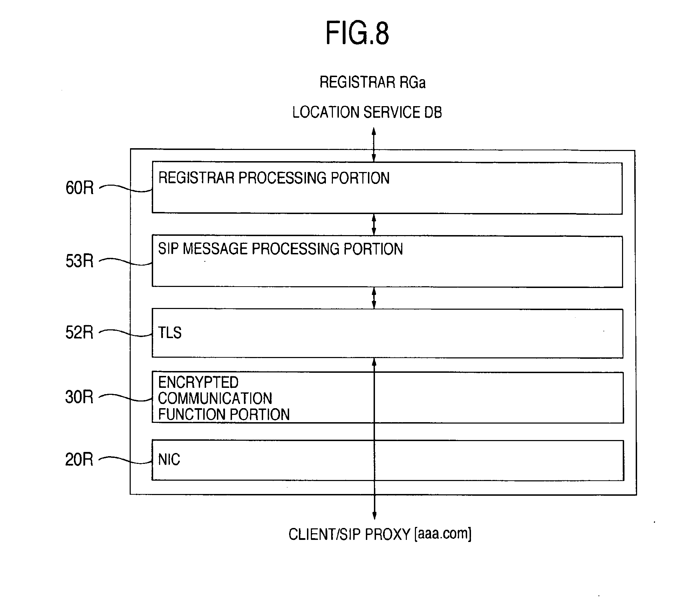

Fig. 7 shows an example of the basic software construction of the SIP proxy PRa. The SIP proxy PRb can take a similar software construction. The software of the SIP proxy PRa includes a network interface card portion (NIC) 20P, an encrypted communication function portion 30P and a key management process portion 50P. The key management process portion 50P includes a TLS portion 52P and an SIP message processing portion 53P. The SIP message processing portion 53P includes a later-appearing SIP-URI (AOR) retrieval function portion 54. The SIP message processing portion 53P of the SIP proxy PRa communicate the encryption message by utilizing the message encoding/decoding function of the TLS portion 52P with the client and the server under its control and with other SIP proxy managing other domain such as PRb.

Fig. 8 shows an example of the basic software construction of the registrar RGa. The registrar Rb can take a similar software construction, too. The software of the registrar RGa includes a network interface card portion (NIC) 20R, an encrypted communication function portion 30R, a TLS portion 52R having a message encoding/decoding function, an SIP message processing portion 53R and a registrar processing portion 60R. When receiving an AOR acquisition request generated by a client or an AOR acquisition request generated by the SIP proxy PRa, the SIP message processing portion 53R requires the registrar processing portion 60R to retrieve the location data. The registrar processing portion 60R gains access to the location service DB of the location server LSV in response to the request from the SIP message processing portion 53R. Incidentally, encryption need not be applied to the communication between the registrar RGa and the SIP proxy PRa.

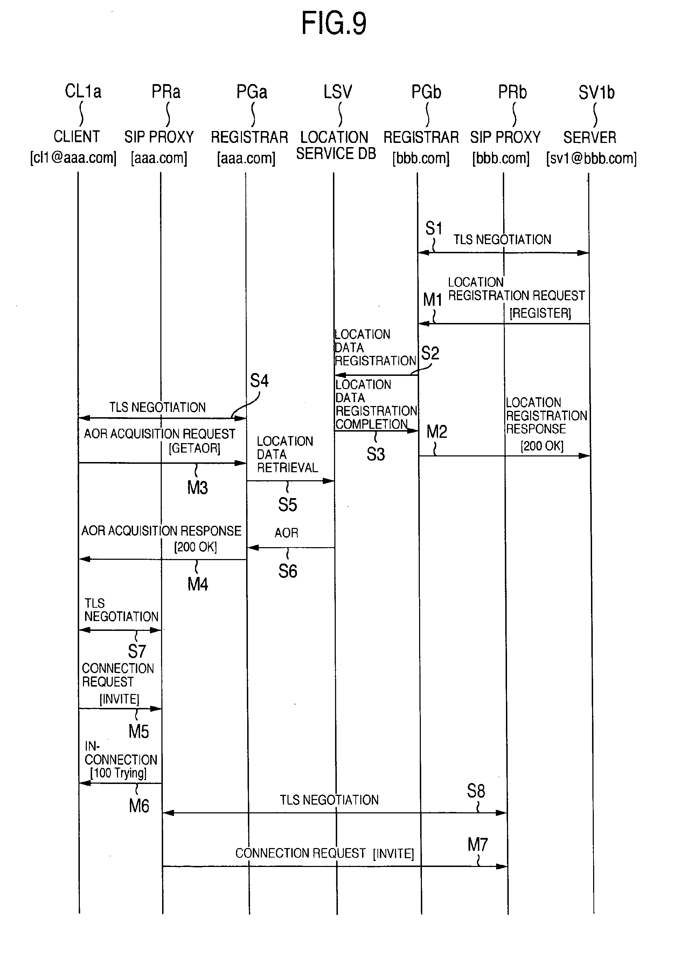

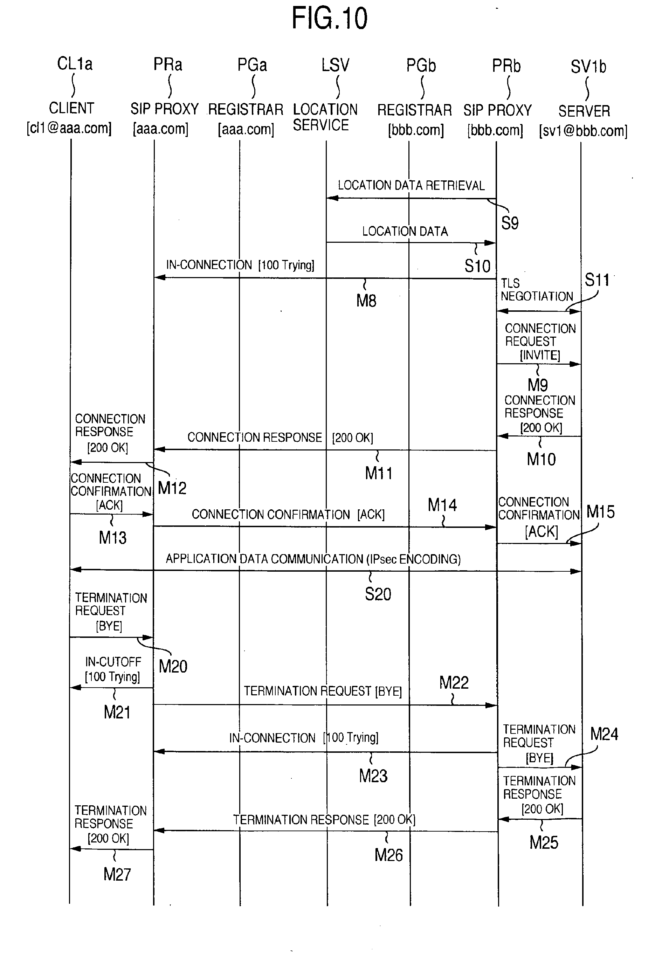

Figs. 9 and 10 are sequence diagrams each showing encryption data communication according to the first embodiment of the invention. In the first embodiment, the client CL1a generates the AOR acquisition request. In this embodiment, the server SV1b connected to the second network as the connection requesting destination from the client CL1a executes TLS negotiation (S1) with the registrar Rb of the SIP server SIPb for authentication of the server SV1b and setting of the parameters for encrypted communication prior to the connection request from the client CL1a, and then transmits a location registration request message (SIP message: REGISTER) M1 to the registrar RGb.

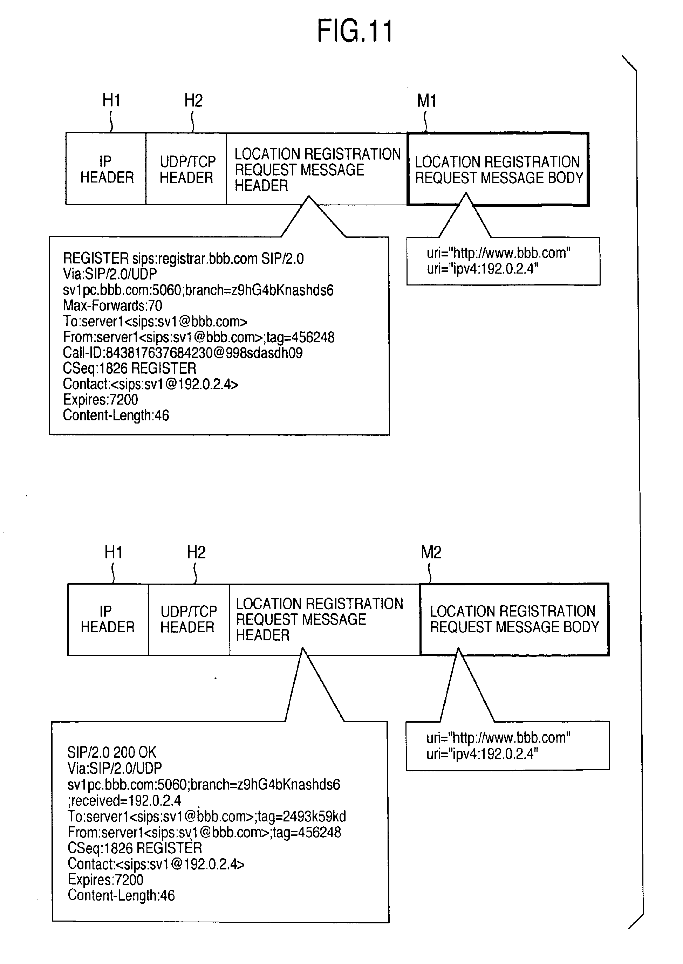

As shown in Fig. 11, for example, the location registration request message M1 is transmitted in an IP packet form in which an IP header H1 and a UDP/TCP header H2 are added. The IP header H1 contains an IP address of the registrar RGb (SIP server SIPb) as the destination address and an IP address of the server SV1b as the transmission destination address.

The SIP message includes a start line representing the kind of the SIP message (Request-Method), a message header portion describing the request or the description content and a message body portion describing the session content, whenever necessary. An address-of-record (Request-URI) representing the destination of the message is described depending on the kind of the message. (Incidentally, the start line and the message header portion will be together called "header portion". The message body portion will be called simply the "body portion", too).

In the case of the location registration request message M1 generated by the server SV2b, the start line contains "REGISTER" as the kind of the SIP message and "register.bbb.com" as the SIP-URI of the registrar RGb as the address-of-record representing the destination of the message. The message header portion continuing the start line contains a Via header representing the route or path of the SIP message, a To header representing the destination of the message, a From header representing the transmitting side of the message, a Call-ID header representing a session identifier designated by the transmitting side, a CSec header representing a request method, a Contract header containing an IP address of the server SV1b like as "sv1@192.0.2.4" to be registered to the location service table, an Expires header representing the expiry date of the message, a Content-Length header representing the length of the succeeding message body portion and other header information.

In the case of the location registration request message M1 in this embodiment, the message body portion contains the list of the service identification information 65 of the server SV1b. A value "46" is set as a length of the message body portion to a Content-Length header and a value "svl@bbb.com" of SIP-URI of the requesting server SV1b is set to the To header and the From header.

When receiving the location registration request message M1, the registrar RGb registers the location data representing the relation between the requesting SIP-URI "sv1@bbb.com" indicated by the From header of the message received and the requesting IP address indicated by the Contact header like as "svl@192.0.2.4" and also registers identification information data representing the relationship between each service identification information 65 contained in the message body portion of the reception message and the requesting SIP-URI "sv1@bbb.com" indicated by the From header of the reception message (S2).

When registration of the data is completed (S3), the location registration response message M2 shown in Fig. 11 is transmitted to the requesting server SV2b. The start line of the location registration response message M2 contains "200 OK" representing the message is the response message as the kind of the SIP message and the header information having the same content as the location registration request message M1 is set to the message header portion.

Explanation will be given about the case where the user of the client CL1a activates the application program under this state and executes the communication requesting operation to the URL "http://www.bbb.com/" of the server SV1b. In the first embodiment of the invention, the client CL1a executes the TLS negotiation (S4) for authenticating the client and setting the parameters for encrypted communication with the SIP server SIPa (registrar RGa) and then transmits the AOR (Address-of-Record) acquisition request message (SIP message: GET AOR) M3.

The AOR acquisition request message M3 described above is the message generated by expanding afresh the SIP in this embodiment and contains "GET AOR" representing the SIP message kind and "registrar.aaa.com" as the SIP URI of the registrar RGa in the start line and the Via header represents the value of the URI as the identifier of the encrypted communication control portion 51C of the client CL1a. The URL "http://www.bbb.com/" of the server SV1b as the connection counterpart of the client CL1a is set to the To header and the URI "cll@aaa.com" is set to the From header.

When receiving the AOR acquisition request message M3, the registrar RGa retrieves the value of the AOR (URI of the server SV1b) corresponding to the URL "http://www/bbb.com/" indicated by the To header of the reception message from the identification information management table 64 of the location service DB (S5). When the retrieval of the location data AOR is completed (S6), the registrar RGa transmits the AOR acquisition response message M4 to the requesting client CL1a.

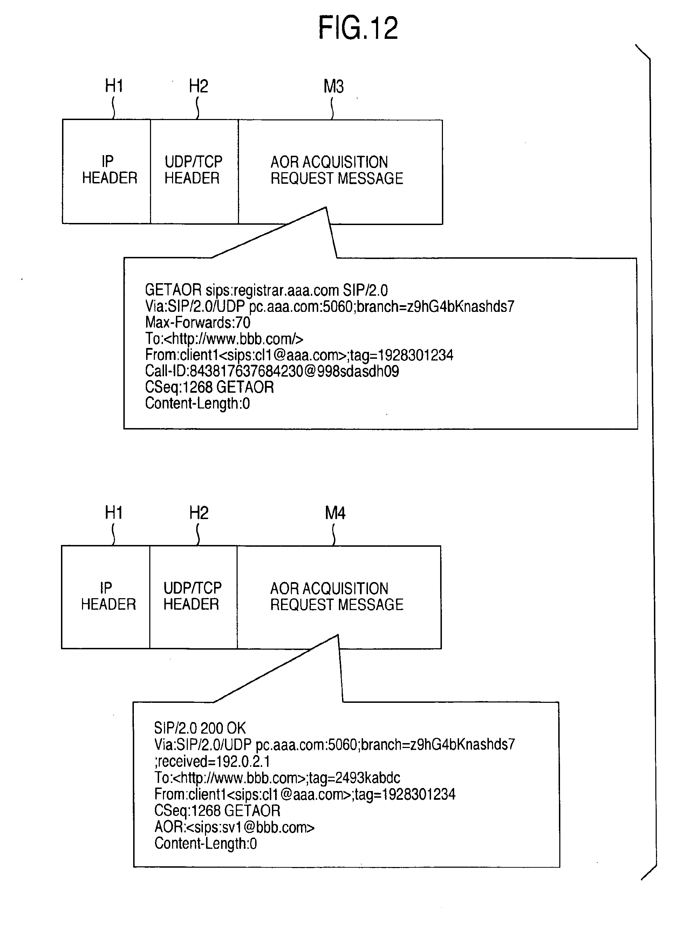

The AOR acquisition response message M4 contains in the start line "200 OK" representing that the message kind is the response message as shown in Fig. 12 and the header information having substantially the same content as the AOR acquisition request message M3 and the AOR header representing the value "sv1@bbb.com" of the SIP-URI of the server SV1b retrieved from the identification information management table 64 are described in the message header portion.

The client CL1a acquiring the SIP-URI of the application server SV1b by the reception of the AOR acquisition message M4 described above executes authentication of the client and setting of the parameters for the encrypted communication with the SIP proxy PRa of the SIP server SIPa (S7) and then transmits the connection request message M5 for the server SV1b to the SIP proxy PRa.

The connection request message M5 includes a header portion M5-1 of the connection request message and its body portion M5-2. The header portion M5-1 of the connection request message contains in its start line the message kind "INVITE" and IP-URI "sv1@bbb.com" of the server SV1b as the message destination as a Request-URI.

The message header portion contains a Via header representing the SIP-URI of the SIP message processing portion 53C in the client CL1a, a To header containing the SIP-URI "sv1@bbb.com" of the server SV1b, a From header containing the SIP-URI "c11@aaa.com" of the client CL1a, a Content-Type header, a Content-Length header and other information. The Content-Type header represents an application program with which the body portion M5-2 is related and the Content-Length header represents the length of the body portion M5-2.

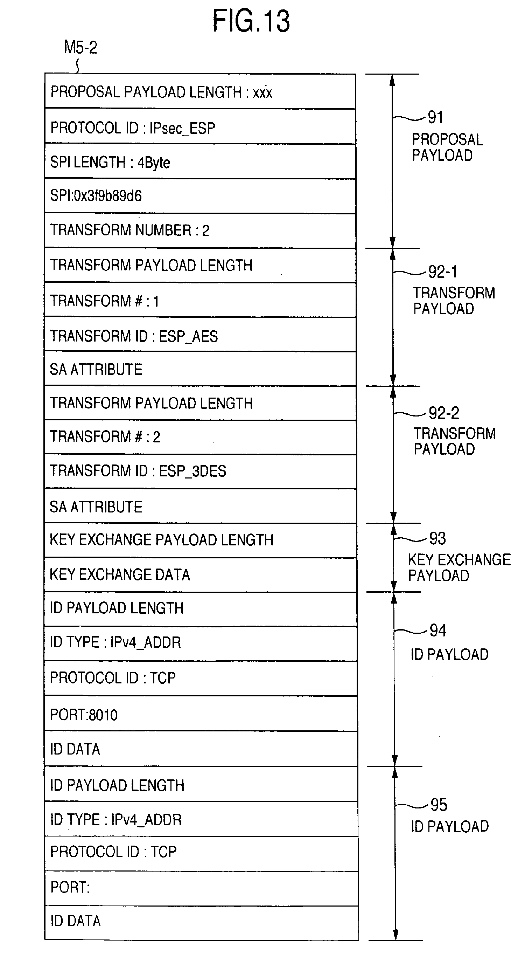

As shown in Fig. 13, for example, the body portion M5-2 of the connection request message M5 contains a proposal payload 91 as SA information applied to the encrypted communication between the client CL1a and the server SV1b in the same way as when ordinary SA is set for IPsec in IKE, a transform payload 92 representing transform identification information, a key exchange payload 93, a first ID payload 94 representing identification information of the requesting party and a second ID payload 95 representing identification information of the connection destination party.

In Fig. 13, the client CL1a proposes "ESP-AES" and "ESP-3DES" as transform ID in the two transform payloads 92-1 and 92-2 and the application server SV1b selects one of them and reports to the client by the connection response message. Incidentally, the ID data of the first ID payload 94 represents the IP address of the requesting client CL1a and the ID data of the second ID payload 95 represents the IP address of the application server SV1b. Incidentally, the client CL1a in this embodiment the IP address corresponding to the URL of the server SV1b "http://www.bbb.com/" as the IP address of the application server SV1b from the DNS.

When receiving the connection request message M5 described above, the SIP proxy PRa transmits a busy message M6 to report to the requesting client CL1a that connection is now made with the server SV1b. The SIP proxy PRa then executes the TLS negotiation (S8) for mutual authentication and for setting of parameters for the encrypted communication with the SIP proxy PRb of the domain to which the application server SV1b belongs.

The busy message M& contains "100 Trying" representing that the request is under execution as a message kind, in the start line, and header information of several items such as Via, To, From, Call-Id, CSec, etc, extracted from the connection request message M5, in the message header portion. The message body portion is omitted.

When the TLS negotiation with the SIP proxy PRb is completed, the SIP proxy PRa adds a new Via header containing its own SIP-UR1 "proxy.aaa.com" and a Record-Route header representing that the connection request passes through the URI "proxy.aaa.com" to the connection request message M5 received from the client and transmits them as the connection request message M7 to the SIP proxy PRb.

When receiving the connection request message described above, the SIP proxy PRb extracts the destination URI "SV1@bbb.com" from the start line of the reception message and requests the location server LSV to retrieve the IP address corresponding to the destination URI from the location service DB (location data retrieval) (S9). When receiving the location data (IP address indicated as "sv1@192.0.2.4") representing the retrieval result of the location service DB (S10), the SIP proxy PRb transmits the busy message M8 to the requesting SIP proxy PRa of the connection request message M7 and executes the TLS negotiation (S11) for mutual authentication and for setting of parameters for encrypted communication with the application server SV1b stipulated by the IP address indicated as "svl@192.0.2.4".

When the TLS negotiation with the application server SV1b is completed, the SIP proxy PRb rewrites the Request-URI of the connection request message M7 to the IP address indicated as "sv1@192.0.2.4", adds a new Via header containing its own SIP-URI proxy.bbb.com and the Record-Route header representing that the connection request passes through the URI "proxy.bbb.com" and transmits them as a connection request message M9 to the application server SV1b.

The application server SV1b replies the connection response message M10 in response to the connection request message M9 described above. The connection response message M10 includes a header portion M10-1 and a body portion M10-2. The start line of the header portion M10-1 contains "200 OK" representing that the message is a response message as a message kind, and the message header portion contains header information,of a plurality of items in the same way as the connection request message M9.

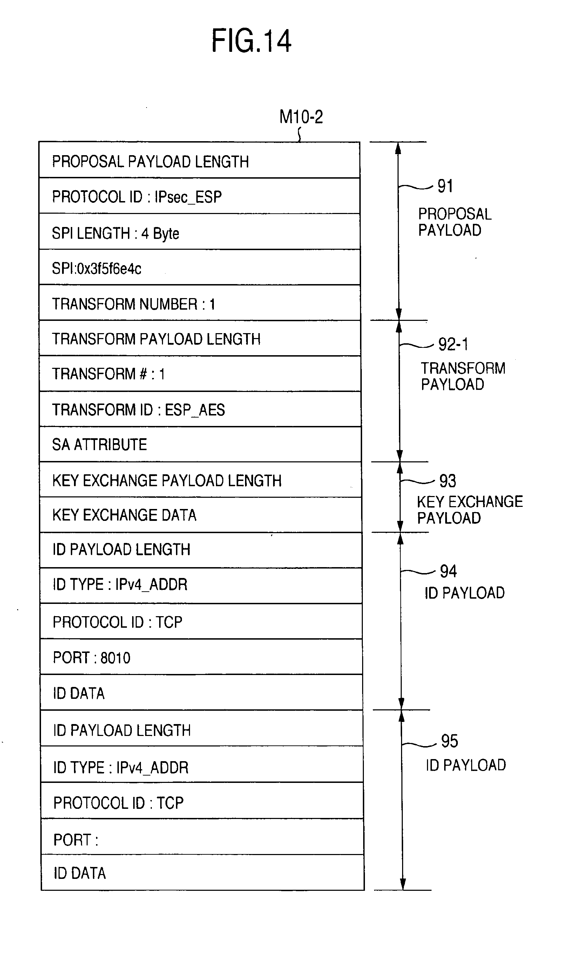

As shown in Fig. 14, for example, the body portion M10-2 leaves one transform payload (EPS-AES in this example) selected by the server SV1b of the two transform payloads 92-1 and 92-2 proposed by the body portion M5-2 of the connection request message M10.

When receiving the connection response message M10, the SIP proxy PRb removes the Via header containing its own URI from the header portion of the reception message, converts it to the connection response message M11 and transmits it to the SIP proxy PRa. Receiving the connection response message M11, the SIP proxy PRa removes the Via header containing its own URI from the reception message header portion, converts it to the connection response message M12 and transmits it to the requesting client CL1a.

When receiving the connection response message M12, the requesting client CL1a analyzes the body portion M10-2 of the reception message, decides the SA information to be applied to the IPsec communication with the application server SV1b registers it to the SADB33C and then transmits the connection confirmation message M13 to the SIP proxy PRa. The connection confirmation message M13 contains in its start line the message kind "ACK" and the SIP-URI of the server SV1b as the Request-URI and in its message header portion, Via, To, From, Call-ID, CSec and Route headers. The message body portion is omitted. The value of the URI extracted from the Record-Route header of the connection response message M12 is set to the Route header.

The connection confirmation message M13 adds a new Via header by the SIP proxy PRa, eliminates the Route header corresponding to the SIP proxy PRa and transfers the result as the connection confirmation message M14 to the SIP proxy PRb. The SIP proxy PRb adds a new Via header to the connection confirmation header M14, eliminates the Route header corresponding to the SIP proxy PRb, converts it to the connection confirmation message M15 and transfers it to the application server SV1b.

As the server SV1b receives the connection confirmation message M15 described above, the client CL1a and the server SV1b can make data communication (S20) in the applications to which IPsec encryption is applied. In other words, the client CL1a encrypts the transmission data to the server SV1b in accordance with the SA information registered to the SADB33C and transmits it in the IP packet form. The server SV1b decodes the reception data from the client CL1a in accordance with the SA information registered to the SADB33V, encrypts the transmission data to the client CL1a in accordance with the SA information and can transmit the transmission data in the IP packet form.

After the data communication with the server SV1b is completed, the client CL1a transmits a termination request message M20 to the SIP proxy PRa. The termination request message contains the message kind "BYE" and the SIP-URI of the server SV1b in its start line and Via, To, From, Call-ID, CSec and Route header in its message header portion in the same way as the connection confirmation message M13, and the message body portion is omitted.

When receiving the termination request message described above, the SIP proxy PRa transmits the in-cutoff message M21 to the requesting client VL1a, adds a new Via header to the termination request message M20, removes the Route header corresponding to the SIP proxy PRa and transmits the resulting message as the termination request message to the SIP proxy PRb. The in-cutoff message M21 contains in its start line "110 Trying" representing that the request is under execution, as message kind and header information of several items such as Via, To, From, Call-ID, CSec, etc, extracted from the termination request message M20 in its message header portion, and the message body portion is omitted.

When receiving the termination request message M22 described above, the SIP proxy PRb transmits the in-cutoff message M23 to the SIP proxy PRa, adds a new Via header to the termination request M22, removes the Route header corresponding to the SIP proxy PRb and transmits the resulting message as the termination request message M24 to the server SV1b.

When receiving the termination request message, the server SV1b transmits a termination response message M25 to the SIP proxy PRb. The termination response message M25 contains in its start line "200 OK" representing the response as message kind and header information of several items such as Via, To, From, Call-ID, CSec, etc, extracted from the termination request message M24 in its message header portion, and the message body portion is omitted.

When receiving the termination response message M25, the SIP proxy PRb removes the Via header containing its own URI from the header portion of the reception message, converts it to the termination response message M26 and transmits it to the SIP proxy PRa. When receiving the termination response message M25, the SIP proxy PRa removes the Via header containing its own URI from the header portion of the reception message, converts it to the termination response message M27 and transmits it to the requesting client CL1a. When receiving the termination response message M27, the requesting client CL1a finishes encoding/decoding and waits for a new packet transmission request by the same or different application.

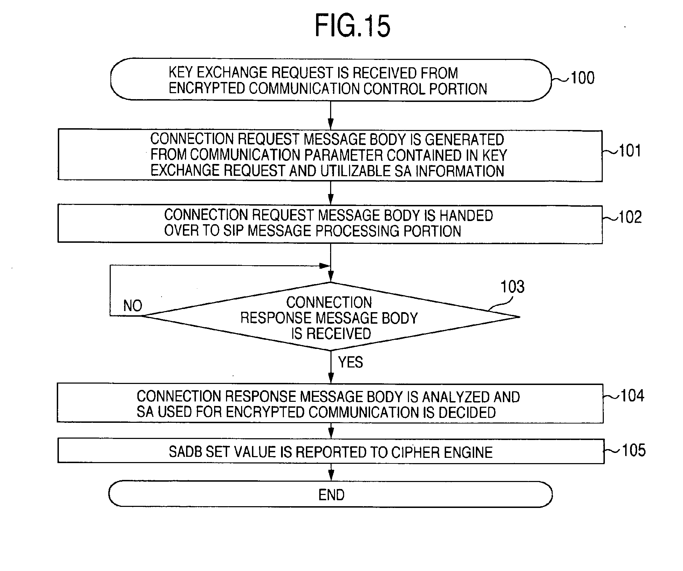

Next, the control operations of the client CL1a, the SIP server SIPa (SIP proxy PRa, registrar RGa) and the server SV2b that make it possible to execute the encryption data communication according to the first embodiment of the invention will be explained with reference to Figs. 15 to 25.

When detecting a communication request from an application 40C to the URL of the server SV1b, a cipher engine 31C of the client CL1a requires a key management process 50C to judge whether or not an encryption processing is applied to the communication with the URL described above. When the key management process 50C judges that the encrypted communication is necessary, the cipher engine 31C acquires the IP address corresponding to the SIP-URI from DNS. The cipher engine 31C retrieves SA (Security Association) information such as a cipher key to be applied to the communication with the IP address from an SADB (Security Association Data Base) 33C, encodes the communication data addressed to the server SV1b from the application 40C by using the SA information and decodes the communication data addressed to the application 40C from the server SV1b. When the SA information to be applied to the communication with the IP address is not registered to the SADB33C, on the other hand, the encrypted communication control portion 51C decides to discard the communication data address from the application 40C to the server SV1b and the communication data addressed from the server SV1b to the application 40C.

Fig. 15 shows a flowchart 100 of the control operation executed by the encrypted communication control portion 51C in response to the request of encrypted communication application judgment generated by the cipher engine 31 in the client CL1a.

In this embodiment, the request for the encrypted communication application judgment from the cipher engine 31C is processed by the encrypted communication control portion 51C. When receiving the encrypted communication application judgment request, the encrypted communication control portion 51 requires an SIP message processing portion 53C to acquire an SIP-URI of the AOR form corresponding to the URL represented by the encrypted communication application judgment request (step 101) and waits for the response from the SIP message processing portion 53C (step 102). Next, the encrypted communication control portion 51 looks up an SPDB (Security Policy Data Base) 32C and judges whether or not the application of the encrypted communication for the SIP-URI contained in the response from the SIP message processing portion 53C and corresponding to the URL described above is necessary. When the application of the encrypted communication is judged as necessary, the key management process 50C retrieves the SA (Security Association) information such as a cipher key to be applied to the SIP-URI described above from the SADB (Security Association Data Base) 33C. Here, when the SA information to be applied to the communication is not registered to the SADB 33C, the encrypted communication control portion 51C executes the exchange of the encryption parameters (key exchange) with the communication peer.

The encrypted communication control portion 51 generates the body portion M5-2 of the connection request message typically shown in Fig. 13 on the basis of the TCP/IP communication parameter indicated by the URL and acquired by looking up the DNS, etc and the utilizable SA information managed by the encrypted communication control portion 51C (step 103), hands over the connection request body portion M5-2 and the SIP-URI to the SIP message processing portion 53C (step 104) and waits for the reception of the connection response body portion from the SIP message processing portion 53C (step 105).

When receiving the connection response message body portion M10-2 shown typically in Fig. 14 from the SIP message processing portion 53C, the encrypted communication control portion 51C analyzes the connection response message body portion received, decides the SA information to be used this time for the encrypted communication, sets it to the SADB33C (step 106) and reports the application judgment result of the encrypted communication to the cipher engine 31C (step 107).

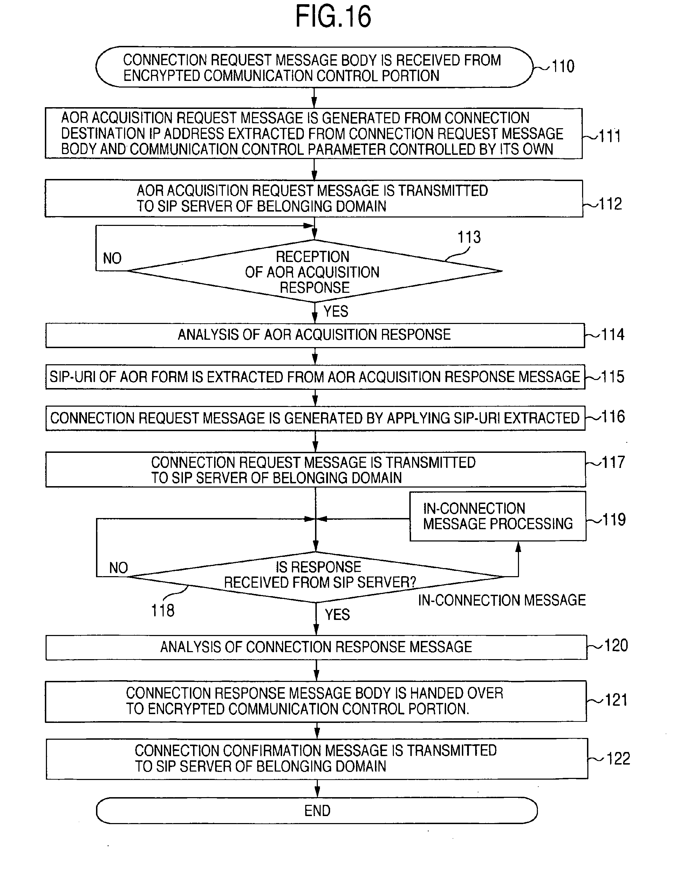

Fig. 16 shows a flowchart 110 of the control operation executed by the SIP message processing portion 53C when the SIP-URI acquisition is required from the encryption control portion 51C.

When receiving the URL from the encrypted communication control portion 51C, the SIP message processing portion 53C generates the AOR acquisition request message M3 typically shown in Fig. 12 (step 111) and transmits this message to an SIP server SIPa (registrar RGa) positioned in the same domain as the client CL1a through the TLS portion 52C, the encrypted communication function portion 30C and the NIC portion 20C. At this time, the TLS portion 52C executes the TLS negotiation with the registrar RGa (S5 in Fig. 9) and then transmits the AOR acquisition request message M3 subjected to TLS encryption to the registrar RGa through the encrypted communication function portion 30C and the NIC portion 20C. The encrypted communication function portion 30C adds the IP header H1 containing the destination IP address of the SIP server SV1 and the UDP/TCP header H2 to the AOR acquisition request message M3 and transmits the resulting message in the IP packet form to the network NW1.

The SIP message processing portion 53C waits for the AOR acquisition response message from the registrar RGa (step 113) and when receiving this AOR acquisition response message, the SIP message processing portion 53C analyzes the reception message (step 114) and extracts the SIP-URI of the AOR form allocated from the AOR header to the application server.

After receiving the body portion of the connection request message and the SIP-URI from the encrypted communication control portion 51C, the SIP message processing portion 53C applies the SIP-URI to the start line and the To header and generates the connection request message including the header portion M5-1 and the body portion M5-2 received from the encrypted communication control portion 51C (step 116).

The SIP message processing portion 53C transmits the connection request message to the SIP proxy PRa of the SIP server SIPa through the TLS portion 52C, the encrypted communication function portion 30C and the NIC portion 20C (step 117) and waits for the response from the SIP proxy PRa (step 118). When receiving the busy message M6 from the SIP proxy PRa, the SIP message processing portion 53C executes the busy message processing (step 119) and waits for the next response from the SIP proxy PRa.

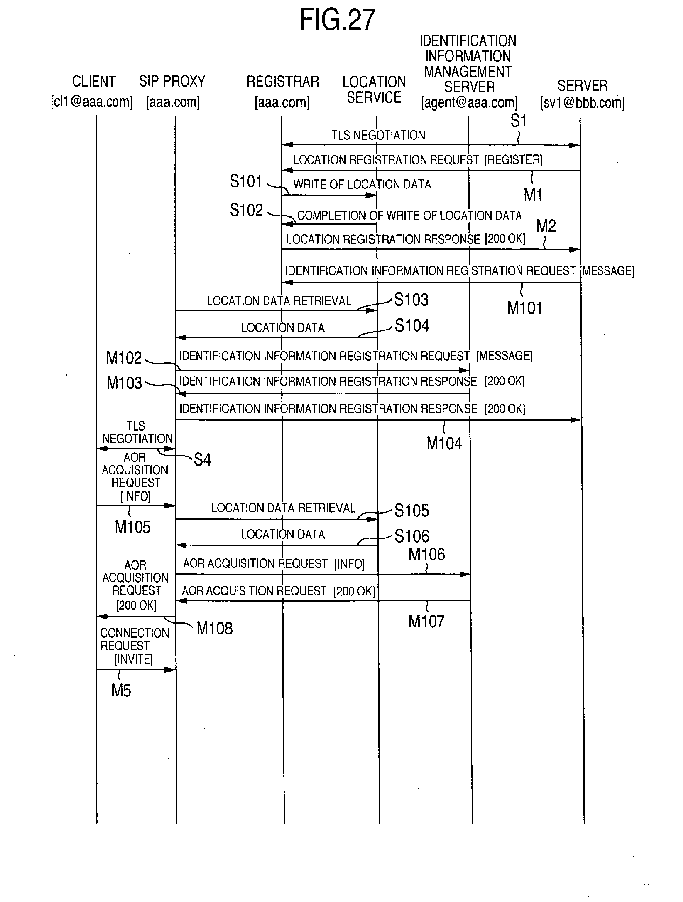

When receiving the connection response message M12 from the SIP proxy PRa, the SIP message processing portion 53C analyzes the reception message (step 120) and hands over the connection response message body portion M12-2extracted from the reception message and typically shown in Fig. 14 to the encrypted communication control portion 51C (step 121). The SIP message processing portion 53C thereafter generates the connection confirmation message M13 typically shown in Fig. 27, transmits it to the SIP proxy PRa through the TLS portion 52C, the encrypted communication function portion 30C and the NIC portion 20C (step 122), and finishes this routine.

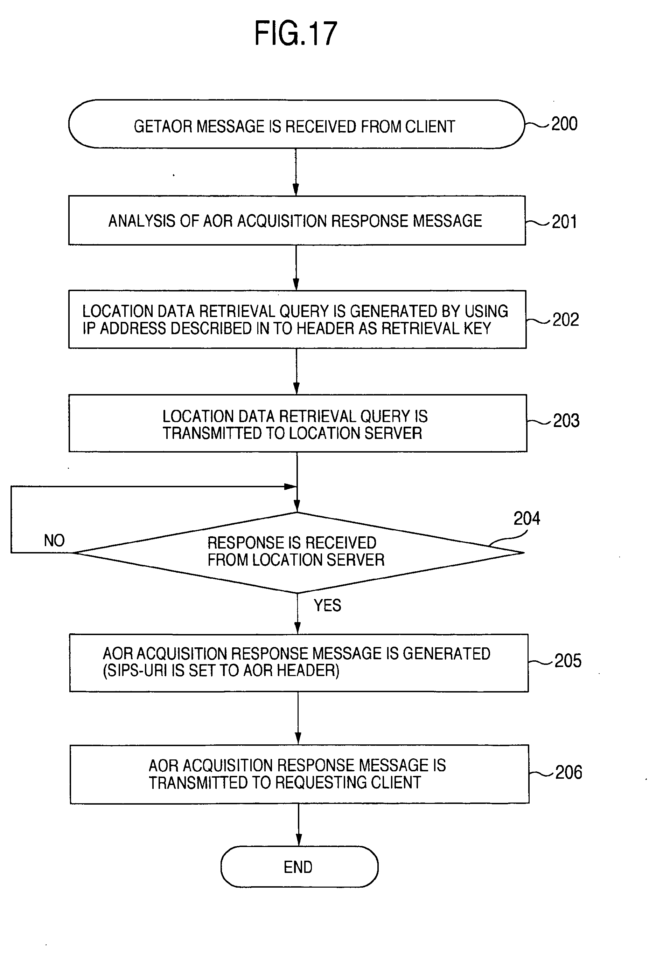

Fig. 17 shows a flowchart 200 of the control operation executed by the SIP message processing portion 53R of the registrar RGa when receiving the AOR acquisition request message. The SIP message processing portion of the registrar RFa analyzes the AOR acquisition request message M3 received (step 201), generates a location data retrieval query by using the URL of the application server SV1b indicated by the To header as a retrieval key (step 202), transmits the retrieval query to the location server LSV through the registrar processing portion 60R (step 203) and waits for the response from the location server (step 204).

When receiving the location data from the location server LSV through the registrar processing portion 60R, the SIP message processing portion 53R generates an AOR acquisition response message M4 containing the SIP-URI indicated by the reception data as the AOR header and typically shown in Fig. 12 (step 205), transmits this message M4 to the transmitting party of the AOR acquisition request message M3 (client CL1a in this example) through the encrypted communication function portion 30R and the NIC portion 20R (step 206), and finishes this routine.

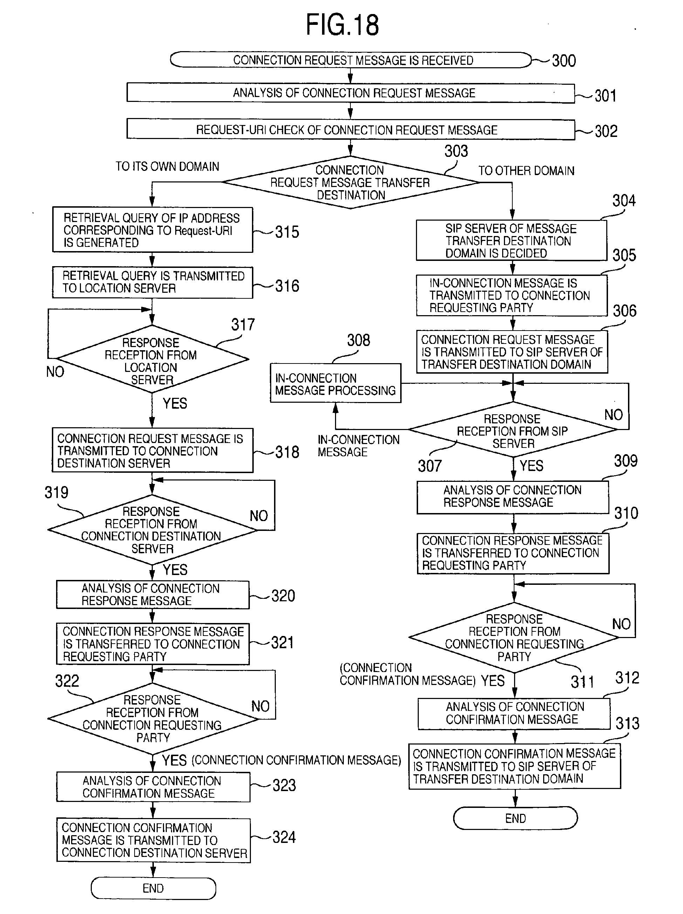

Fig. 18 shows a flowchart 300 of the control operation executed by the SIP message processing portion 53P of the SIP proxy PRa when receiving the connection request message M5 from the client CL1a. The SIP message processing portion 53P of the IP proxy PRa analyzes the reception message when receiving the connection request message M5 from the client CL1a (step 30), checks the Request-URI described in the start line of the reception message (step 302) and judges the transfer destination of the reception message from the domain name indicated by the Request-URI (step 303).

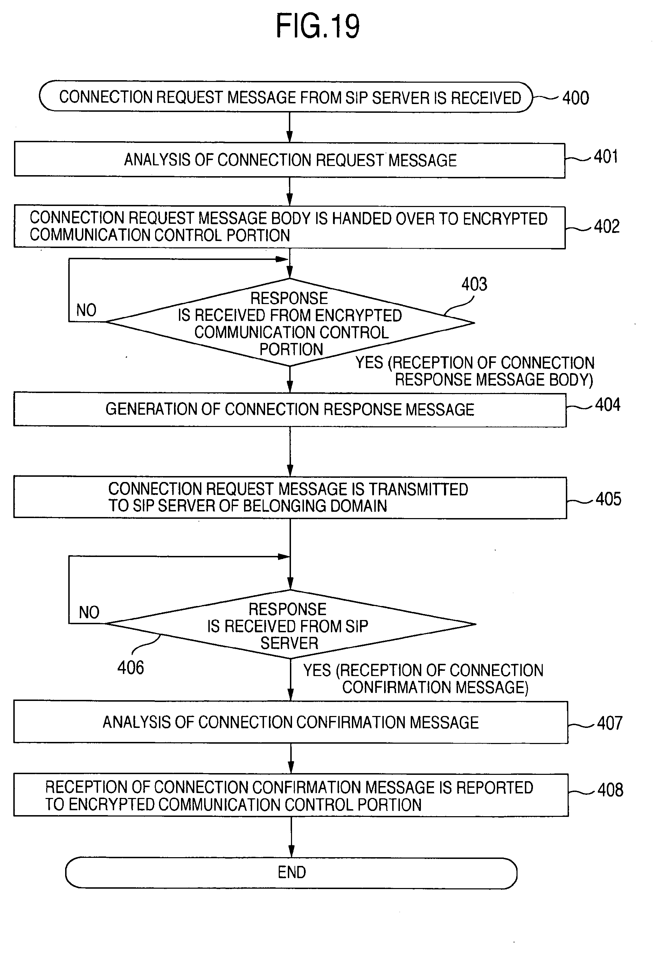

When the transfer destination of the reception message is judged as belonging to other domain, the SIP processing portion 53P decides the SIP server (SIP proxy) of the transfer destination domain of the reception message by the DNS retrieval (NAPTR retrieval + SRV retrieval + A retrieval), etc (step 304). In the example shown in Fig. 9, it is clarified from the DNS retrieval that the transfer destination of the connection request message M5 is the SIP proxy PRb. In this case, the SIP message processing portion 53P transmits the busy message M6 typically shown in Fig. 19 to the client CL1a as the transmitting party of the connection request message M5 through the TLS portion 52P, the encrypted communication function portion 30P and the NIC portion 20P (step 305), transfers a connection request message M7 having a form in which a Via header is afresh added to the connection request message M5 (step 306) and waits for the response from the SIP proxy PRb (step 307).

When receiving the busy message M8 from the SIP proxy PRb, the SIP message processing portion 53P executes the busy message processing (step 308) and waits for the next response from the SIP proxy PRb. When receiving the connection response message M11 from the SIP proxy PRb, the SIP message processing portion 53P analyzes the reception message (step 309), removes the Via header containing its own SIP-URI from the reception message and transfers the message as the connection response message M12 to the connection requesting party (client CL1a) (step 310). The SIP message processing portion 53P thereafter waits for the response from the connecting requesting party (client CL1a) (step 311). When receiving the connection confirmation message M13, the SIP message processing portion 53P analyzes the reception message (step 312), adds a new Via header containing its own SIP-YRI to the reception message, transfers this message as the connection confirmation message M13 to the SIP proxy PRb (step 313) and finishes this routine.

When the transfer destination of the connection request message received from the client terminal CL1a is judged as belonging to the same domain as the SIP proxy PRa such as the server V1a (or SV2a) in the judgment step 303, for example, the SIP message processing portion 53P generates a location data (IP address) retrieval query using the SIP-URI indicated by the Request-URI of the reception message as a retrieval key (step 315), transmits this location data retrieval query to the location server LSV (step 316) and waits for the location service response (317).

When receiving the location data from the location server, the SIP message processing portion 53P applies the IP address of the application server indicated by the location data to the destination IP address, transmits the connection request message to the network NW1 in the IP packet form (step 318) and waits for the response from the application server (step 309). A new Via header containing the SIP-URI of the SIP proxy PRa is added to the connection request message.

When receiving the connection response message from the application server, the SIP message processing portion 53P analyzes the reception message (step 320), transfers the connection response message in the form in which the Via header corresponding to the SIP message processing portion 53P is removed, to the connection requesting party (step 321) and waits for the response from the connection requesting party (client CL1a) (step 322). When receiving the connection confirmation message from the connection requesting party, the SIP message processing portion 53P analyzes the reception message (step 323), transfers the connection confirmation message in the form in which a new Via header is added to the application server (step 324) and finishes this routine.

Fig. 19 shows a flowchart 400 of the control operation executed by the SIP message processing portion 53S of the application server SV1b when receiving the connection request message M9 from the SIP proxy PRb. The connection request message M9 transmitted from the SIP proxy PRb to the application server SV1b is decoded in the TLS portion 52S and is then inputted to the SIP message processing portion 53S. When receiving the connection request message M9, the SIP message processing portion 53S analyzes the reception message (step 401), hands over the connection request message body portion M5-2 extracted from the reception message to the encrypted communication control portion 51S (step 402) and waits for the response from the encrypted communication control portion 51S (step 403).

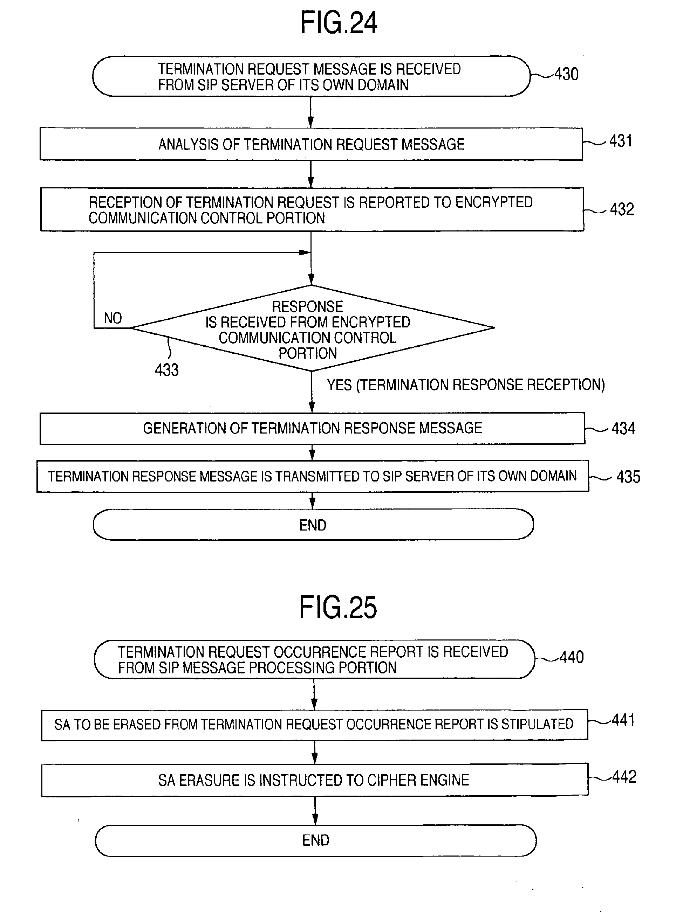

When receiving the connection response message body portion M10-2 from the encrypted communication control portion 51S, the SIP message processing portion 53S generates the connection response message M11 typically shown in Fig. 25 (step 404). The SIP message processing portion 53S transfers the connection response message M11 to the SIP proxy PRb through the TLS portion (step 405), the encrypted communication function portion and the NIC portion and waits for the response from the SIP proxy PRb (step 406). When receiving the connection confirmation message M15, the SIP message processing portion 53S analyzes the reception message (step 407), reports the reception of the connection confirmation message M15 to the encrypted communication control portion 51S (step 408) and finishes this routine.

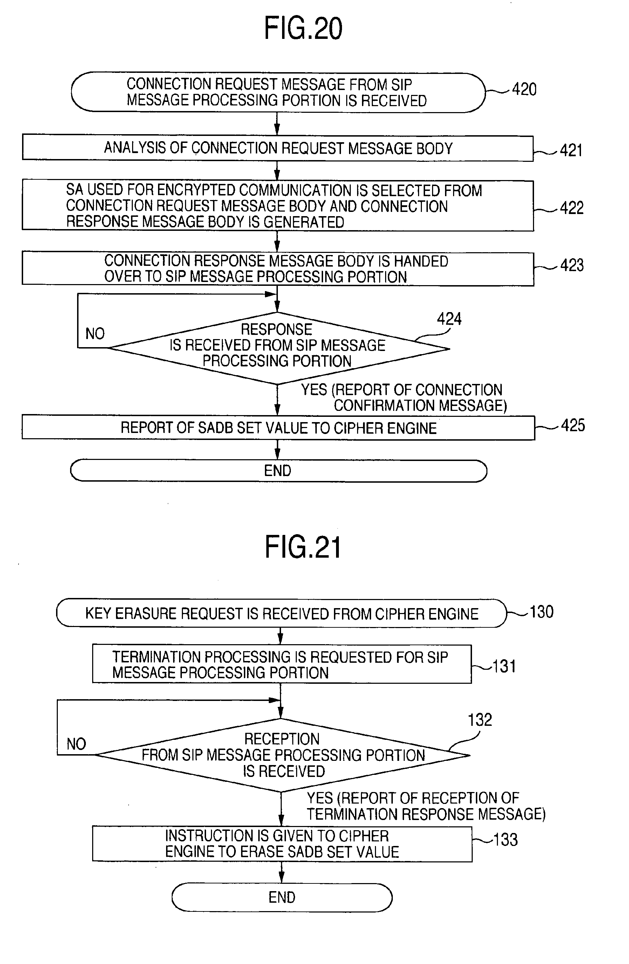

Fig. 20 shows a flowchart 420 of the control operation executed by the encrypted communication control portion 51S of the server SV1b when receiving the connection request message body portion M5-2 from the SIP message processing portion 53S.

The encrypted communication control portion 51S analyzes the connection request message body portion M5-2 received from the SIP message processing portion 53S (step 421), selects the SA to be applied to the encrypted communication with the client from the SA information described in the connection request message body portion M5-2 (transform payloads 92-1 and 92-2 in the example shown in Fig. 13) and generates the body portion M10-2 of the connection response message typically shown in Fig. 14 (step 422). The encrypted communication control portion 51S hands over the connection response message body portion M10-2 to the SIP message processing portion 53S (step 423) and waits for the response from the SIP message processing portion 53S (step 424). When receiving the reception report of the connection confirmation message from the SIP message processing portion 53S, the encrypted communication control portion 51S sets the SA information to the SADB33S (step 425) and finishes this routine.

Fig. 21 shows a flowchart 130 of the control operation executed by the encrypted communication control portion 51C in response to the communication end request generated by the cipher engine 31C in the client CL1a. When the client CL1a finishes the application of the communication with the server SV1b, the cipher engine 31C generates the communication end request to the encrypted communication control portion 51C. When receiving the communication end request from the cipher engine 31C, the SA/SP control portion 51C requires the SIP message processing portion 53C to generate the termination request message (step 131) and waits for the response from the SIP message processing portion 53C (step 132). When receiving the reception report of the termination response message from the SIP message processing portion 53C, the SA/SP control portion 51C erases the set value of the SAD33S corresponding to the cipher erasure request (step 133) and finishes this routine.

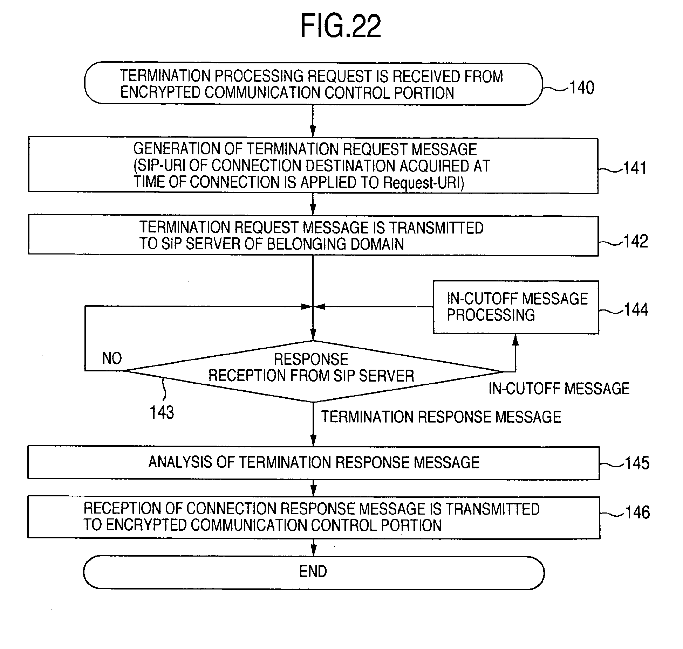

Fig. 22 shows a flowchart 140 of the control operation executed by the SIP message processing portion 53C when receiving the termination request message from the SA/SP control portion 51C. When receiving the generation request of the termination request message from the SA/SP control portion 51C, the SIP message processing portion 53C generates the termination request message M20 (step 141) and transmits the IP packet of the termination request message M20 to the SIP server SIPa (SIP proxy PRa) through the TLS portion 52C, the cipher engine 31C of the encrypted communication function portion 30C and the NIC portion 20C (step 142).

The SIP message processing portion 53C waits for the response from the SIP proxy PRa (step 143), executes the in-cutoff message processing (step 144) when receiving the in-cutoff message M21 and waits for the next response from the SIP proxy PRa. When receiving the termination response message M27 from the SIP proxy PRa, the SIP message processing portion 53C analyzes the reception message (step 145), reports the reception of the termination response message to the encrypted communication control portion 51C (step 146) and finishes this routine.

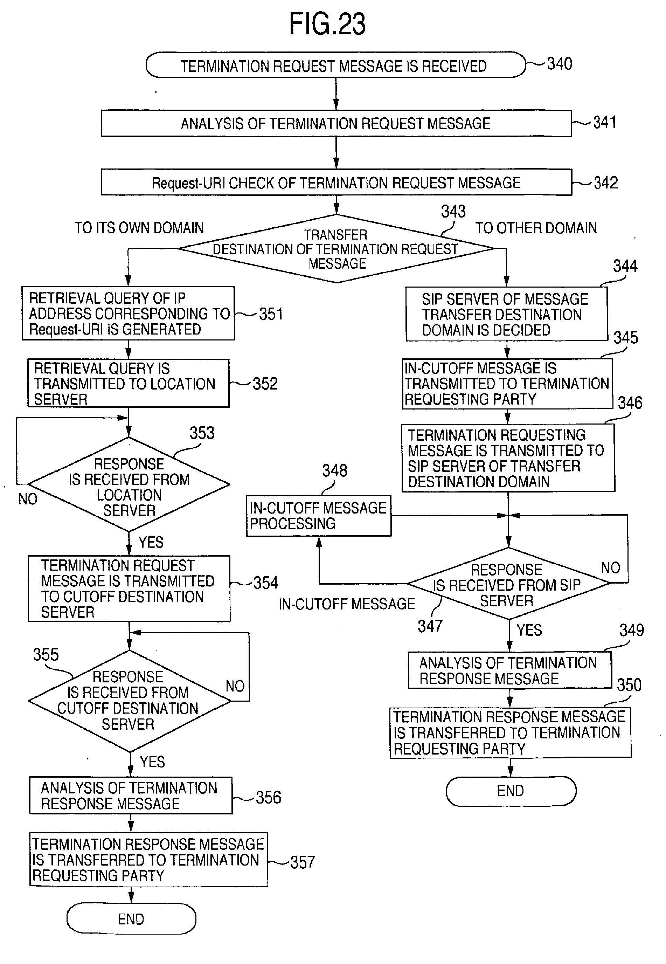

Fig. 23 shows a flowchart 340 of the control operation executed by the SIP message processing portion 53P of the SIP proxy PRa when receiving the termination request message M20 from the client. The SIP message processing portion 53P analyzes the termination request message M20 received (step 341) and checks the Request-URI of the reception message (step 342). The SIP message processing portion 53P judges the transfer destination of the reception message from the domain name described in the Request-URI (step 343) and decides the SIP server (SIP proxy) of the transfer destination domain of the reception message by the DBS retrieval (NAPTR retrieval + SRV retrieval + A retrieval), etc, when the transfer destination is judged as belonging to other domain (step 344).

It is known that in the example shown in Fig. 10, the transfer destination of the termination request message M20 is the SIP proxy PRa. In this case, the SIP message processing portion 53P transmits the in-cutoff message M21 (step 345) to the client CL1a as the transmitting party of the termination request message M20 through the TLS portion 52P, the encrypted communication function portion 30P and the NIC portion 20P, then adds a new Via heard to the termination request message M20, transfers the termination request message M22 after the removal of the Route header corresponding to the SIP proxy PRa to the SIP proxy PRb (step 346) and waits for the response from the SIP proxy PRb (step 347).

When receiving the in-cutoff message M23 from the SIP proxy PRb, the SIP processing portion 53P executes the in-cutoff message processing (step 348) and then waits for the next response from the SIP proxy PRb. When receiving the termination response message M26 from the SIP proxy PRb, the SIP processing portion 53P analyzes the reception message (step 349), removes the Via header containing its own SIP-URI, transfers the resulting message as the termination response message M27 to the termination requesting party (client CL1a) (step 350) and finishes this routine.

Incidentally, when the transfer destination of the termination request message M20 received from the client terminal CL1a is judged as belonging to the same domain as the SIP proxy PRa in the judgment step 343, the SIP message processing portion 53P generates a location data (IP address) retrieval query using the SIP-URI indicated by the Request-URI of the reception message as a retrieval key (step 351), transmits this retrieval query to the location server LSV (step 352) and waits for the location service response (step 353).

When receiving the location data from the location server LSC, the SIP processing portion 53P applies the server IP address indicated by the location data to the destination IP address, transmits the IP packet of the termination request message to the network NW1 (step 354) and waits for the response from the server (step 355). Incidentally, a new Via header containing the SIP-URI of the SIP proxy PRa is added to the termination request message. When receiving the termination response message from the destination server of the termination request message, the SIP message processing potion 53P analyzes the reception message (step 356), transfers the termination response message after the removal of its own Via header to the termination requesting party (step 357) and finishes this routine.

Fig. 24 shows a flowchart 430 of the control operation executed by the SIP message processing portion 53S when receiving the termination request message M24 from the SIP proxy. When receiving the termination request message through the TLS portion 52S, the SIP message processing portion 53S analyzes the reception message (step 431), designates identification information (Call-ID, for example) of the communication to be cut off for the encrypted communication control portion 51S, reports the reception of the termination request (step 432) and waits for the response from the encrypted communication control portion 51S (step 433). When receiving the termination response from the encrypted communication control portion 51S, the SIP message processing portion 53S generates the termination response message M25 (step 434), transfers this message to the SIP proxy PRb through the TLS portion, the encrypted communication function portion and the NIC portion (step 435) and finishes this routine.

Fig. 25 shows a flowchart 440 of the control operation executed by the encrypted communication control portion 51S when receiving the occurrence of the termination request message from the SIP message processing portion 53S. The encrypted communication control portion 51S specifies the SA information to be erased from the SADB33S on the basis of the communication identification information reported (step 441), erases the SA information (step 442) and finishes this routine.

In this embodiment, the identification information management table 64 is updated by analyzing the registration request message inclusive of the service identification information 65 to the body portion of the registration request message. However, the invention is not particularly limited to this arrangement and a value may be set in advance to the identification management table 64 or a part of the entry by a manager of the location server LSV.

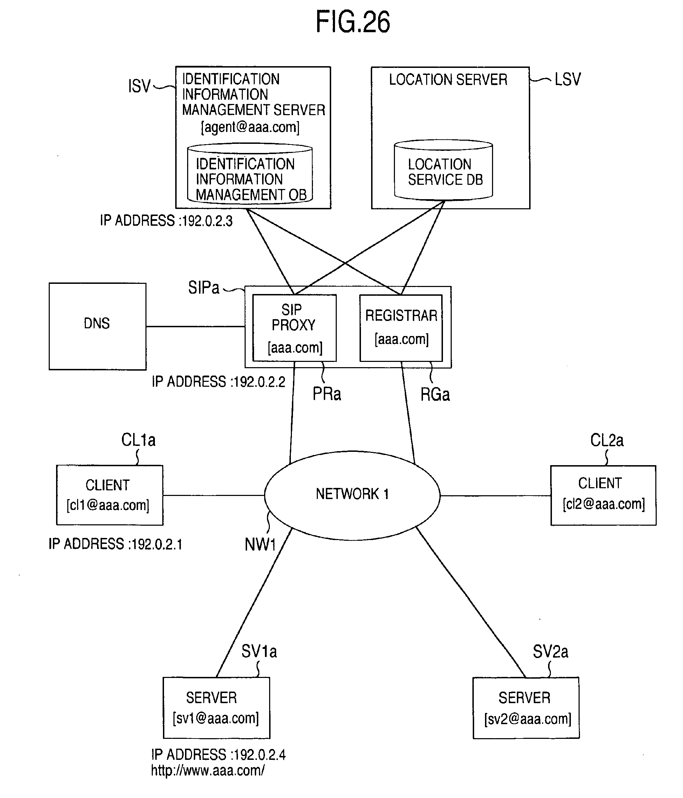

Next, the encryption data communication according to the second embodiment of the invention will be explained with reference to Figs. 26 to 30. In the first embodiment described above, the SIP message for retrieval is used to retrieve the association between the identification information and the SIP-URI in the identification management table 64, and the SIP proxy PR retrieves the identification information management table 64 on the basis of the header of the SIP message. The communication among the client, the server and the SIP server is protected by the TLS.

The feature of the second embodiment of the invention resides in that it includes an identification information management server apparatus (hereinafter called "identification information management server") ISV including an identification information management service provision portion (hereinafter called "identification information management service") 66 operates for registering and erasing the location information to and from the identification information management table 64 and for retrieving the identification information management table 64.

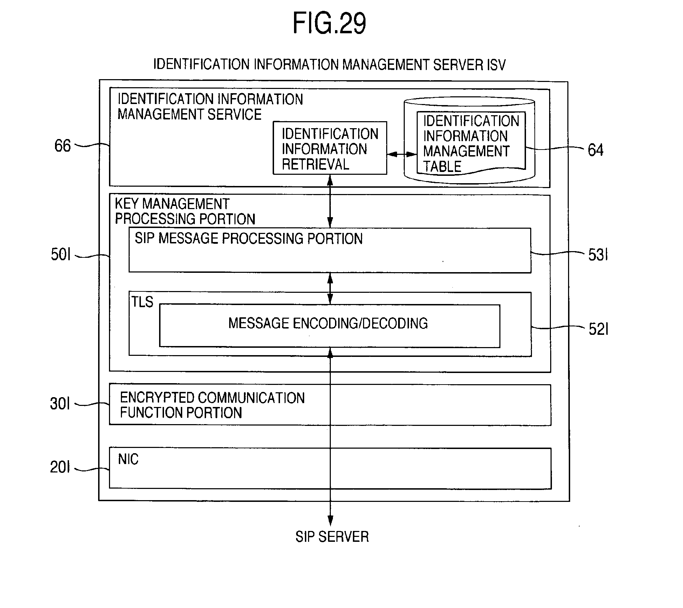

Fig. 29 shows a functional and structural example of the identification information management server ISV. The identification information management server ISVa includes a network interface card portion (NIC) 20I, an encrypted communication function portion 30I, a key management process portion 50I and an identification information management service 66. The key management process portion 50I includes a TLS portion 52I and an SIP message processing portion 53I and the identification information management service 66 includes the identification information management table 64.

The network construction in the second embodiment of the invention includes a network NW1 an SIP server SIPa manages, a location server LSV, a DNS (Domain Name System) and an identification information management server ISV as shown in Fig. 26.

Clients CL1a and CL2a and servers SV1a and SV2a are connected to the network NW1. The SIP server SIPa includes an SIP proxy PRa and a registrar PGa.

Incidentally, an SIP-URI "agent@aaa.com" is allocated to the identification information management server ISV in this embodiment. The client CL and the server SV in this embodiment update the content of the identification information management table 64 by transmitting the SIP message requesting the location registration and deletion of the registration in this embodiment. The client CL and the server SV in this embodiment retrieve the content of the identification information management table 64 by transmitting an SIP message requesting the AOR acquisition to the SIP-URI described above.

Fig. 27 shows an encrypted communication sequence diagram in the second embodiment of the invention. Explanation will be omitted on the same step and on the same message that have already been explained in the first embodiment represented by the same reference numeral in Figs. 9 and 10. In the second embodiment, the server SV1a executes the TLS negotiation (S1) for setting the parameters for the authentication of the server SV1a and the encrypted communication with the registrar RGa of the SIP server SIPa prior to the connection request from the client CL1a and then transmits the location registration request message M1 to the registrar RGb.

When receiving the location registration request message M1, the registrar RGa registers the location data representing the relation between the requesting party SIP-URI "sv1@aaa.com" indicated by the From header of the reception message and the requesting party IP address indicated as "sv1@192.0.2.4" on the Contact header (S101) and when data registration is completed (S102), transmits the location registration response message M102 to the requesting server SV2a.

When receiving the location registration response message M2, the server SV1a transmits next the identification information registration message M101 (SIP message: MESSAGE) to the identification information management server SV.

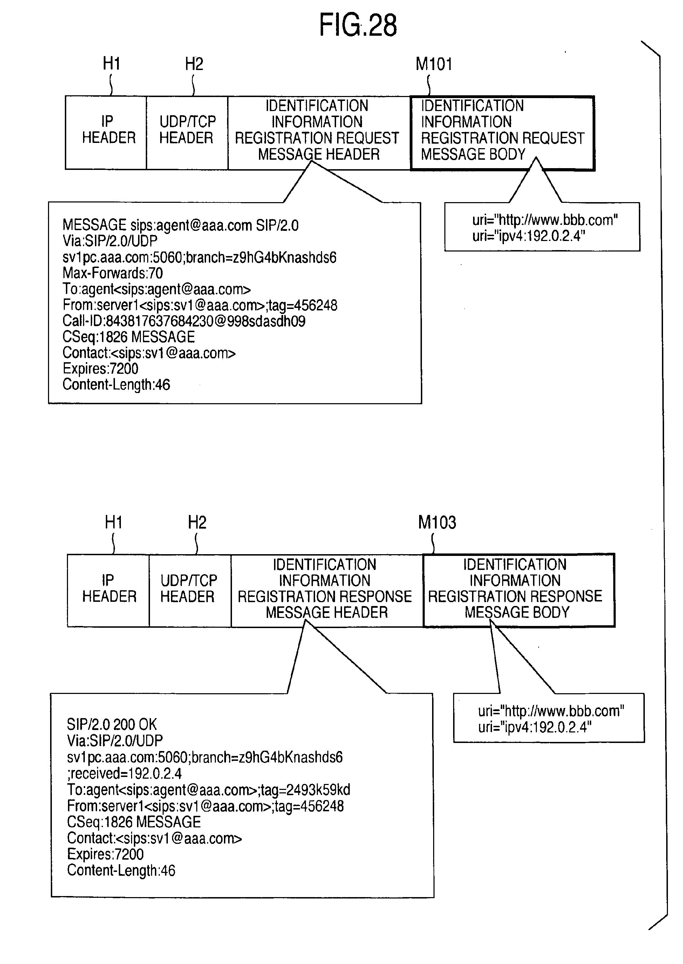

The identification information registration message M101 contains "MESSAGE" representing the kind of the SIP message and "agent@aaa.com" as the SIP-URI of the identification information server ISV in the start line as shown in Fig. 28, for example, and the Via header represents a value of FQDN of the server SV1a. Also, "agent@aaa.com" as the SIP-URI of the identification information management server ISV is set to the To header and "sips:svl@aaa.com" as the SIP-URI of the server SV1a is set to the From header. An Expires header representing the valid time of the message, a Content-Length header representing the length of a subsequent message body portion and other header information are further contained. A list of the service identification information 65 of the server SV1a is contained in the message body portion of the identification information registration request message M101.

When receiving the identification information registration request message M101, the SIP server SIPa retrieves the location database by using "agent@aaa.com" as the address of the identification information registration request message M101 as a key (S103), acquires the IP address "192.168.0.3" of the identification information management server ISV (S104) and transmits the identification information registration request message M102 to the IP address (M102).

When receiving the identification information registration request message M102, the identification information management server ISV stores each service identification information 65 of the body portion of the identification information registration request message M102 in association with "sips:sv1@aaa.com" of the SIP-URI of the transmitting party of the identification information registration request message M101 and transmits the identification information registration response message M103 (SIP message: 200 OK) addressed to the server SV1a to the SIP server SIPa. The start line of the identification information registration response message M103 contains "200 OK" representing that the message is the response message as the kind of the SIP message, and the header information having the same content as the location registration request message is set to the message header portion.

When receiving the identification information registration response message M103, the SIP server SIPa transmits the identification information registration response message M104 to "sips:sv1@aaa.com" as the transmitting party of the identification information registration response message M104 (M104).

When the user of the client CL1a boots up under this state the application program and executes the operation of requesting the communication to the URL "http://www.aaa.com" of the server SV1a, the client CL1a in the second embodiment executes the TLS negotiation (S4) for the authentication of the client and for the setting of the parameters for encrypted communication with the SIP server SIPa (registrar RGa) and then transmits the AOR (Address-of-Record) acquisition request message (SIP message: INFO) M105 addressed to the identification information management server ISV to the SIP server SIPa.

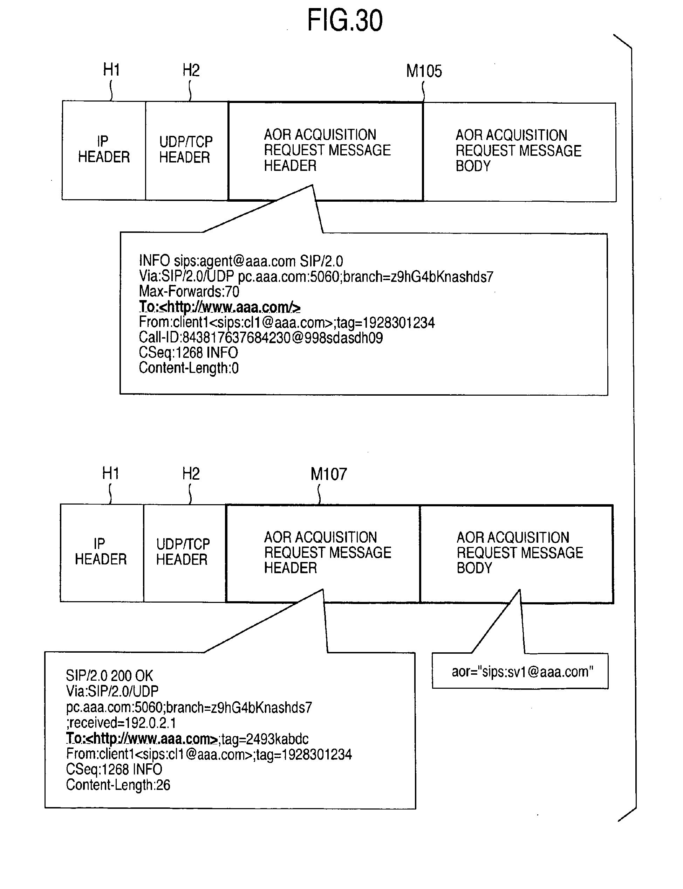

The AOR acquisition request message M105 described above contains in its start line "INFO" representing the SIP message kind and "sips:agent@aaa.com" as the SIP-URI of the identification information management server ISV as shown in Fig. 30, for example, and the Via header represents the value of FQDN of the client CL1a. The URL "http://www.aaa.com" of the server SV1a as the connection counter-part of the client CL1a is set to the To header and the URI "sips:cl1@aaa.com" of the client Clla is set to the From header.

When receiving the AOR acquisition request message M105, the SIP server SIPa retrieves the location database by using "agent@aaa.com" as the address of the identification information registration message M105 as a key (S105) and acquires the IP address of the identification information management server ISV (S106). Then, the SIP server SIPa transmits the identification information registration request message M105 to this IP address (M106).

When receiving the AOR acquisition request message M105, the identification information management server ISV retrieves the value of the AOR (URI of the server SV1a) corresponding to "http://www.bbb.com" indicated by the To header of the reception message from the domain management table 64 of the domain management DC, and transmits the AOR acquisition response message M107 to the requesting client CL1a through the SIP server SIPa when the retrieval of the location data AOR is completed.

The AOR acquisition response message M107 contains "200 OK" representing the message kind in its start line, the header information having the same content as the AOR acquisition request message M105 described in the message header portion and the value representing "sv1@aaa.com" of the SIP-URI of the server SV1a retrieved from the identification information management table 64.

The client CL1a acquiring the SIP-URI of the application server SV1a by the reception of the AOR acquisition response message M107 transmits the connection request message M5 for the server SV1a to the SIP proxy PRa.

Since the subsequent operation is the same as that of the first embodiment, the explanation thereof will be omitted.

Incidentally, when the IP address is applied to the Request-URI or the To header of the SIP message, the address is described as "sips:192.0.2.4" shown in Fig. 12 or Fig. 28. In this case, the SIP proxy or registrar or server side can judge whether it is the SIP-URI description or the IP address description depending on whether or not the character string continuing "sips:" in the field in question is the IP address dividing numerals of not greater than three digits by dots. To insure the judgment as to the SIP-URI description or the IP address description, it is possible to clarify that the SIP-URI is the one that needs the AOR solution by using the URI parameters such as "sips:192.0.2.4; id=jpv4". When a scheme IPv4 (or IPv6) is detected in the field in question such as "ipv4:192.0.2.4", the promise may be made to the effect that the IP address is described subsequently.

In this embodiment, the AOR acquisition request message for acquiring the SIP-URI corresponding to the IP address of the application server is transmitted to the SIP server when the application program of the client transmits the packet to the IP address of the application server. However, the invention is not particularly limited to this method but can be applied for the acquisition of an address-of-record (identifier adopted by session management server for identifying connection destination server) corresponding to a service identifier from the service identifier of an arbitrary system used by the application program. When the application program of the client executes the operation for requesting the connection to the URL containing the information for designating the application server, for example, the AOR acquisition request message may be sent to the SIP server to acquire the SIP-URI corresponding to this URL. At this time, the URL may be in advance registered to the SIP server, or a list of URL that can be accessed by the application server may be contained in the location registration message when the application server makes location registration.

In this embodiment, the communication of the client, the server and the SIP server is protected by the TLS but the invention is not limited to this method and the communication may be protected by S/MIME. In the second embodiment, the SIP message protected by the S/MIME may be exchanged among the client, the server and the identification information management server ISV.

Next, the encryption data communication according to the third embodiment of the invention will be explained. In the third embodiment, a plurality of location servers and a plurality of identification information management servers exist and individual location servers and identification information management servers manage the location information and the identification information about mutually different SIP-URI.

Therefore, the third embodiment has its feature that there is provided a domain management server apparatus (hereinafter called "domain management server") DSV having a domain management table 68 recording the location server and the identification information management server as the management domain to be referred to when acquiring the SIP-URI from the location information and the identification information.

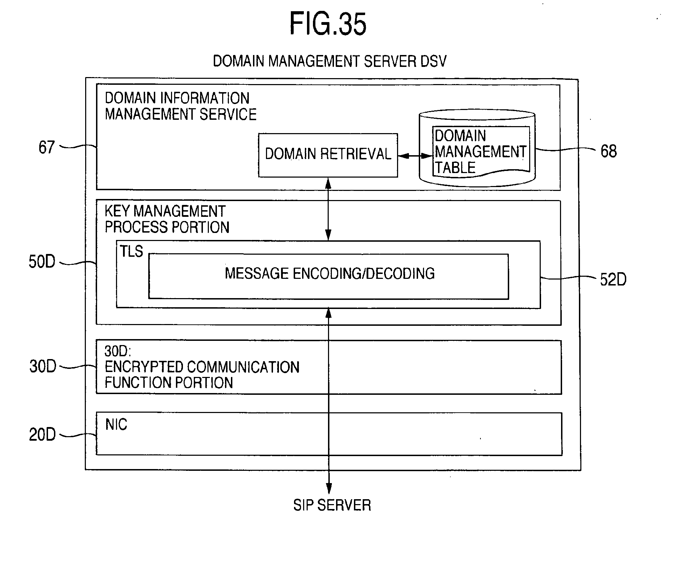

Fig. 35 shows a structural and functional example of the domain management server DSV. The domain management server DSV includes a network interface card portion (NIC) 20D, an encrypted communication function portion 30D, a key management process portion 50D and a domain management service provision portion (hereinafter called "domain management service") 67 and the key management process portion 50D has a TLS portion 52D. The domain management service 67 has a domain management table 68.

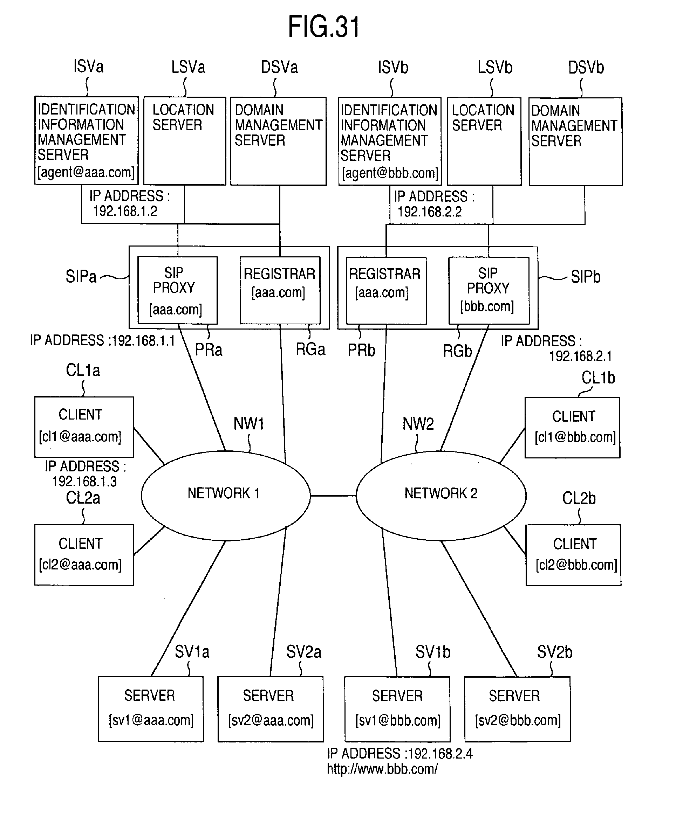

Fig. 31 shows an example of the system construction to which this embodiment is applied.

The system hereby shown includes a first network NW1 forming a first domain managed by an SIP server SIPa, a second network NW2 forming a second domain managed by an SIP server SIPb, a location server LSVa recording location information by the SIP server SIPa, a location server LSVb recording location information by the SIP server SIPb, an identification information management server ISVa recording identification information by the SIP server SIPa, an identification information management server ISVb recording identification information by the SIP server SIPb, a domain management server DSVa providing information (domain information)of the management domain to the SIP server SIPa and a domain management server DSVb providing the domain information to the SIP sever SIPb.

Clients CL1a and CL2a and servers SV1a and SV2a are connected to the first network NW1 and clients CL1b and CL2b and servers SV1b and SV2b are connected to the second network NW2. An SIP server SIPa includes an SIP proxy PRa and a registrar PGa and an SIP server SIPb includes an SIP proxy PRb and a registrar PGb.

An SIP-URI "agent@aaa.com" is allocated to the identification information management server ISVa and an SIP-URI "agent@bbb.com" is allocated to the identification information management server ISVb, respectively.

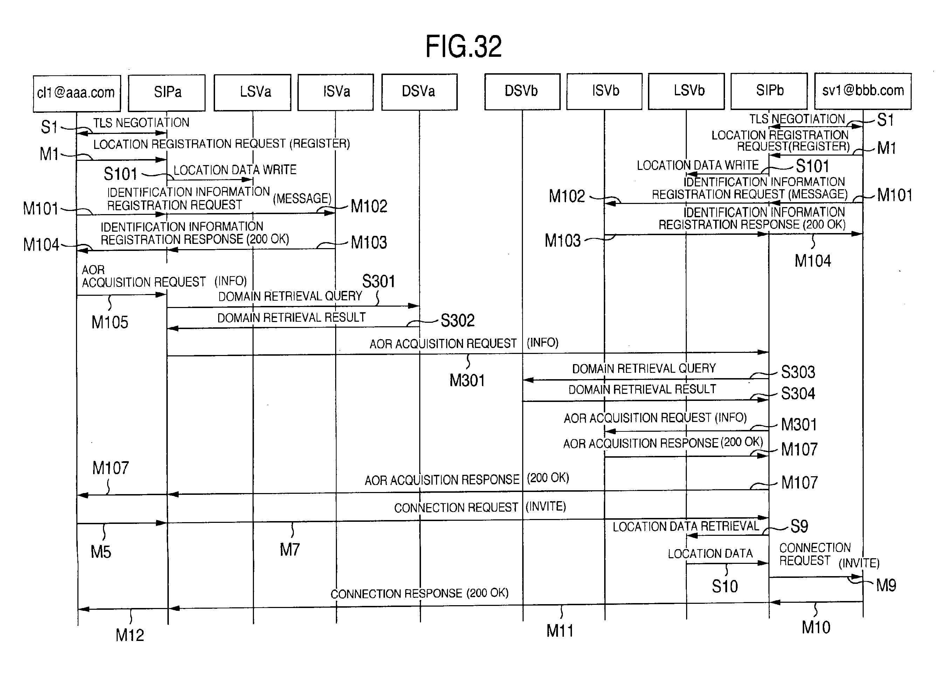

Fig. 32 is an encrypted communication sequence diagram in the third embodiment. The explanation will be omitted about the steps and the messages indicated by the same reference numeral as in Figs. 9, 10 and 27 and already explained in the first and second embodiments.

Incidentally, the messages exchanged among the client CL, the SIP server SIP, the identification information management server ISV and the server SV to establish or cut off the encrypted communication in the third embodiment are those which are based on the SIP message defined in the document 3 and store the information for establishing or cutting off the encrypted communication such as setting of encrypted communication in the body of the SIP message.

In the third embodiment, when the power source of the server SV1b is activated and the processor 11 starts processing the key management process 50S, the TLS portion 52S of the server SV1b executes the TLS negotiation (S1) with the registrar RGb. When the TLS session is established, the SIP message processing portion 53S transmits the location registration request message (SIP message: REGISTER) M1 to the registrar RGb and the location data is registered to the location service table 61 of the location server (5101). The SIP message processing portion 53S transmits the identification information registration message (SIP message: MESSAGE) M101 addressed to the identification information management server ISV to the SIP server SIPb and stores the service identification information 65 in the identification information management table 64.

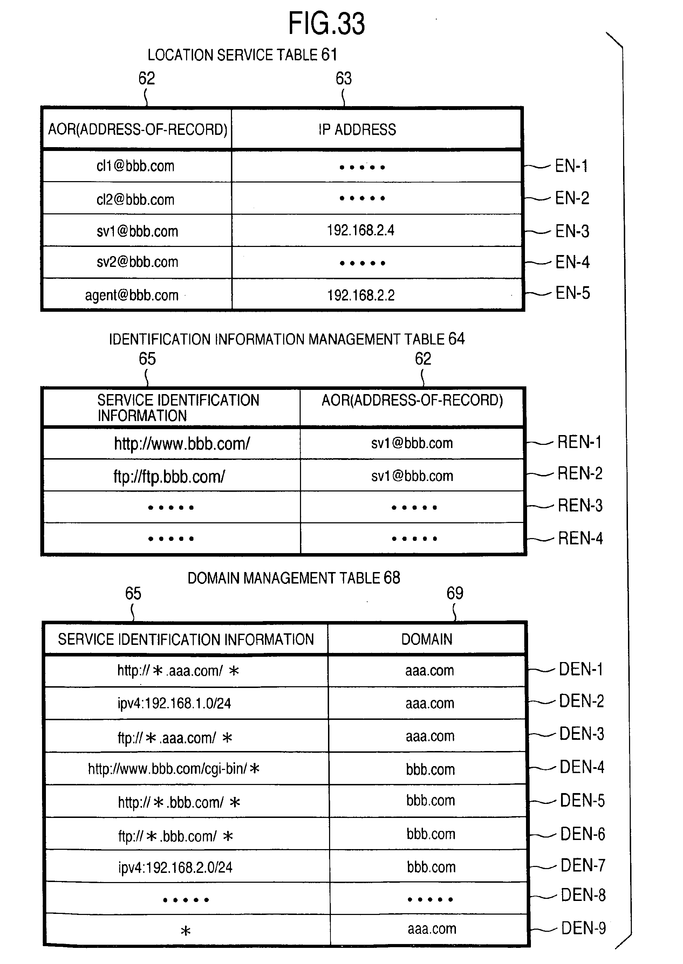

Fig. 33 shows an example of each of the location service table 61, the identification information management table 64 and the domain management table 68 that are managed by the location server LSVb, the identification information management server ISVb and the domain management server DSVa, respectively. An IP address (192.168.2.4) of the server SV1b is stored in the entry (EB-3) of the location service table 61 in association with the SIP-URI (sv1@bbb.com) of the server SV1b. Also, "http://www.bbb.com" and "ftp://ftp.bbb.com/" are registered as the identification information of the server SV1b to REN-1 and REN-2 of the identification information management table 64 shown in Fig. 33 in association with the SIP-URI (sv1@bbb.com) of the server SV1b.

Similarly, the client CL1a, too, executes the TLS negotiation with the registrar RGa and registers the location information and the identification information to the location server LSVa and the identification information management server ISVa.

As described above, when the power source of the server SV and the client CL is made in this embodiment, the location service table 61 and the identification information management table 64 are automatically updated to the latest state.

In this embodiment, the server SV and the client CL transmit the location registration request message and the identification information registration message and again update the location service table 61 and the identification information management table 64 before the valid term described in the response message of the location registration request message and the identification information registration message expires. The SIP server SIP and the identification information management server ISV can thus know that the server SV and the client CL do not operate when the location service table 61 and the identification information management table 64 are no longer updated.

Incidentally, the operations of transmitting the location registration request message to the SIP server SIP and registering the location information to the location service table 61 are called "log-in to the SIP server ISP", too. When the location information in which the valid term of the client CL does not expire is registered to the location service table 61, such a client CL is called "under log-in", too.

The processing described above may be executed when the user of the server SVa and the client CL1a gives a command to the key management process 50S and the key management process 50C. Alternatively, a screen view urging the user to execute the processing described above may be displayed after the user logs in to the operating system (OS).

When the user of the client CL1a boots up the application program and conducts the operation of requesting the communication to the URL "http://www.bbb.com/" of the server SV1b under this state, the encryption function portion 30C of the client CL1a detects this request and asks the encrypted communication control portion 51C to generate the SA information for the communication in the third embodiment. The encrypted communication control portion 51C instructs the SIP message processing portion 53C to transmit the AOR acquisition request message (SIP message: INFO) M105 addressed to the identification information management server ISV to the SIP server SIPa.

When receiving the AOR acquisition request message M105, the SIP server SIPa transmits the domain retrieval query to the domain management server DSVa by using the content described in the To header of the AOR acquisition request message, that is, "http://www.bbb.com/", as a retrieval key in order for the SIP message processing portion 53P to examine the identification information management server ISV as the destination of the transmission of the AOR acquisition request message M105 (S301).

The domain information management service 67 of the domain management server DSVa that is asked to conduct the domain retrieval retrieves the domain management table 68.

The domain management table 68 shown in Fig. 33 represents an example of the domain management table 68 managed by the domain management server DSVa. The feature of the domain management table 68 shown in Fig. 33 is that normal expression containing those characters and character strings which have specific roles such as "*" representing "an arbitrary character string" can be used as the service identification information 65. Service identification information 65 starting with "http://" and containing".aaa.com/" at the back of an arbitrary character string is managed by a management domain "aaa.com" (DEN-1). Similarly, "IPv4 address belonging to a sub-net "192.168.10.0" is managed by a management domain "aaa.com" (DEN-2). Another feature of the domain management table 68 shown in Fig 33 is that the entries are written from above to below in accordance with the priority. For example, the service identification information 65 "http://www.bbb.com/cgi-bin/CGI/" matches with both of DEN-4 and DEN-5 but is judged as matching with DEN-4 having higher priority.

In this embodiment, the manager of the domain management server DSV decides in advance the association of the service identification information with the domain as well as priority of retrieval, generates the domain management table 68 and registers this table to the domain management server DSV. However, the invention is not particularly limited to this method and the domain management table 68 may be updated by the interlocking operation of the domain management servers DSV. In this way, the manager of the domain management server DSV need not report updating of the domain management table 68 to other manager to keep matching of the domain management table 68.

The domain information management service 67 of the domain management server DSVa retrieves from above to below the entry of the domain management table 68 to check whether or not the service identification information 65 contained in the given retrieval key exists. In the case of "http://www.bbb.com/", the service identification information matches with DEN-5. Therefore, the information is judged as being managed by the management domain "bbb.com".

The domain information management service 67 returns the domain retrieval result to the SIO server SIPa (S302).

When the domain retrieval result received from the domain management server DSVa indicates the management domain different from its own management domain, the SIP message processing portion 53P of the SIP server SIPa generates the AOR acquisition request message M301 addressed to the identification information management server ISV of this different management domain and transmits the AOR acquisition request message M301 to the SIP server of the management domain. More concretely, the AOR acquisition request message M301 is obtained by changing the SIP-URI of the identification information management server ISV described in the start line of the AOR acquisition request message M105 to the SIP-URI "sips:agent@bbb.com" of the identification information management server ISV managing the management domain "bbb.com" contained in the domain retrieval result, and the SIP server SIPa transmits the AOR acquisition request message M301 to the SIP server SIPb. When receiving the AOR acquisition request message M301, the SIP server SIPb transmits the domain retrieval query to the domain management server DSVb by using the content described in the To header of the AOR acquisition request message M301, that is, "http://www.bbb.com/", as the retrieval key to examine the identification information management server ISV as the transmission destination of the AOR acquisition request message M301 in the SIP message processing portion 53P (S303).

The domain information management service 67 in the domain management server DSVb that is asked to execute the domain retrieval retrieves the domain management table 68 and returns the domain retrieval result to the SIP server SIPb (S304). Incidentally, when the retrieval key is "http://www.bbb.com", "bbb.com" is returned in accordance with DEN-5.

Because the domain retrieval result that the SIP message processing portion 53P received from the domain management server DSVb is the same management domain as its own management domain, the SIP server SIPb transmits the AOR acquisition request message M301 to the identification information management server ISVb.

As the identification information management server 66 retrieves the value of the AOR (SIP-URI of server SV1b) corresponding to the URL "http://www.bbb.com/" indicated by the To header of the reception message and acquire the retrieval result "sv1@bbb.com" from the identification information management table 64, the identification information management server ISVb that received the AOR acquisition request message M301, transmits the AOR acquisition response message M107 to the requesting client CL1a through the SIP server SIPb and the SIP server SIPa.

The client CL1a acquiring the SIP-URI "sv1@bbb.com" of the application server SV1a by the reception of the AOR acquisition response message M107 described above transmits the connection request message M5 for the server SV1a from the SIP message processing portion 53C to the SIP proxy PRa.

Since the subsequent operations are the same as those of the first embodiment, explanation will be omitted.

Explanation will be hereinafter given on the control operation in the case where the SIP server and the identification information management server shown in Fig. 32 receive the AOR acquisition request message.

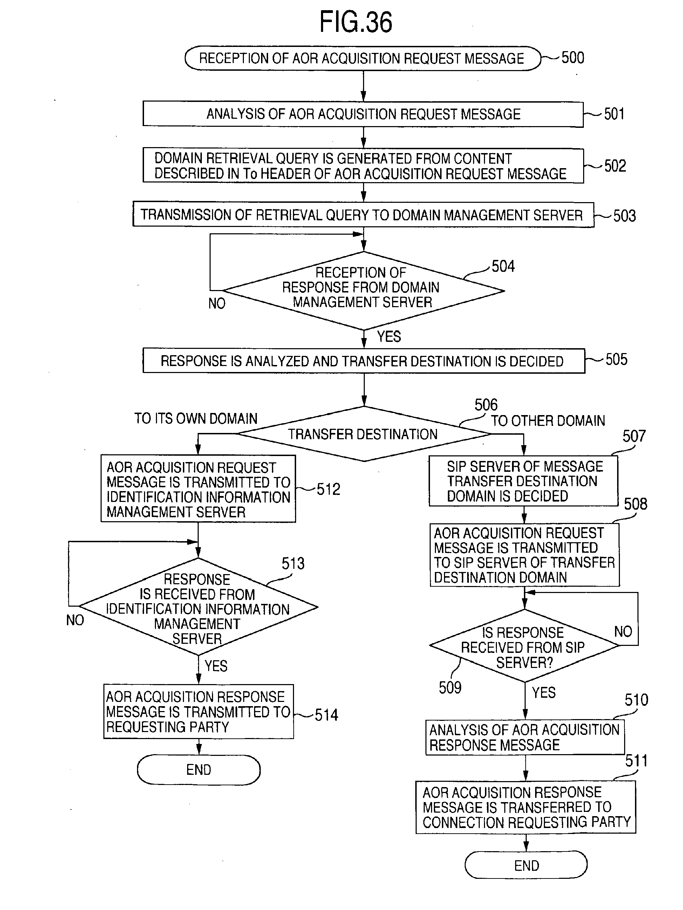

Fig. 36 is a flowchart showing the operation when the SIP server SIPa shown in Fig. 32 receives the AOR acquisition request message M105. Incidentally, the same operation is executed when the SIP server SIPb receives the AOR acquisition request message M301, too.

When receiving the OR acquisition request message M105, the SIP message processing portion 53P in the SIP server SIPa analyzes the AOR acquisition request message M105 (step 501) and generates the domain retrieval query by SQL on the basis of the content described in the To header of the AOR acquisition request message M105 (step 502). Next, the SIP message processing portion 53P transmits the domain retrieval query so generated to the domain management server DSVa (step 503, S301 (S303 in the case of SIP server SIPb)) and waits for the response from the domain management server DSVa (step 504).

Receiving the domain retrieval result (S302 (S304 in the case of SIP server SIPb)), the SIP message processing portion 53P analyzes the domain retrieval result and decides the transfer destination of the AOR acquisition request message M105 (step 505).

When the transfer destination is other management domain, the SIP server of the transfer destination domain of the AOR acquisition request message M301 is decided (step 507) and the AOR acquisition request message M301 is generated from the AOR acquisition request message M105. Then, the AOR acquisition request message M301 is transmitted to the SIP server of the transfer destination domain (step 508) and the response is awaited (step 509).

In the SIP server SIPa receiving the AOR acquisition request message M107, the SIP message processing portion 5P analyzes the AOR acquisition request message M107 (step 510), transmits the AOR acquisition request message M107 to the transmitting party of the AOR acquisition request message M105(step 511) and finishes the processing.

When the transfer destination is the own management domain in step 505, on the other hand, the AOR acquisition request message M105 is transmitted to the identification information management server ISVa (step 512) and the response from the identification information management server ISVa is awaited (step 513).

When the AOR acquisition request message M107 is received from the identification information management server ISVa, the SIP message processing portion 53P transmits the AOR acquisition request message M107 to the transmitting party of the AOR acquisition request message M105 (step 514) and the SIP server SIPa finishes the processing.

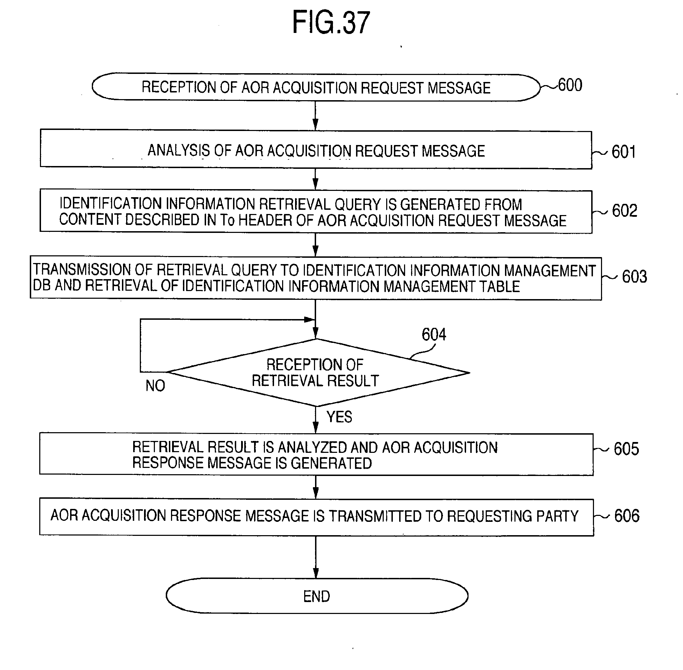

Fig. 37 is a flowchart showing the operation when the identification information management server ISVb receives the AOR acquisition request message M301 in Fig. 32.

When the identification information management server ISVb receives the AOR acquisition request message M301 (step 600), the SIP message processing portion 53I of the identification information management server ISVb analyzes the AOR acquisition request message M301 and hands over the content described in the To header of the AOR acquisition request message M301 to the identification information management service 66 (step 601). The identification information management service 66 generates the identification information retrieval query from the description content of the To header received (step 602) and retrieves the identification information management table 64 (step 603).

When receiving the retrieval result from the identification information management DB, the identification information management service 66 analyzes the retrieval result and hands over the AOR 62 to the SIP message processing portion 531 (step 605).

When receiving the AOR 62, the SIP message processing portion 531 generates the AOR acquisition response message M107 (step 605) and transmits the AOR acquisition response message M107 to the transmitting party of the AOR acquisition request message M301 (step 606).

Explanation given above explains the control operation when the IP server and the identification information management server receive the AOR acquisition request message in the third embodiment of the invention.

In the third embodiment, the SIP server that received the AOR acquisition request message retrieves the domain management server DSV and decides the identification information management server to which the AOR acquisition request message is to be transmitted. Therefore, because the client CL and the service identifier of the server SV can be managed by a plurality of identification information management servers ISV, the load can be distributed.

Because the domain management table 68 in the third embodiment can describe the service identification information 65 by the normal expression, the management domains of all the service identification information 65 need not be registered and the increase of the size of the domain management table 68 can be suppressed.

Incidentally, the invention is not particularly limited to the construction of the third embodiment described above but may also be constituted in the following way.

For example, one table describing the service identification information 65 of all kinds is used for the domain management table 68. However, the domain management table 68 may be divided in accordance with each kind of service identification information 65. It is thus possible to retrieve at a high speed the management domain of the service identification information 65.

Whenever the management domain of the service identification information 65 is retrieved, the domain management table 68 calculates whether or not the service identification information is coincident with the normal expression for each entry. However, it is also possible to calculate each entry of the domain management table 68 at the start of the operation of the domain management server DSV, to expand the result to the entry of all the service identification information 65 and to keep it on the memory as a table or a tree. In this way, the management domain of the service identification information 65 can be retrieved at a high speed.

In the domain management table 68, the management domain information of each entry describes the management domain that manages the service identification information 65 of the entry. However, the domain management server DSV may be constituted into a hierarchical construction. When the entry of the domain management table 68 is the management domain other than its own domain, the management domain of the domain management server DSV may be described when this management domain is managed by the management server DSV of a lower order and the management domain of the domain management server DSV of a higher order may be described in other cases. In this way, management of the domain management table 68 becomes easier.

The SIP server SIP and the domain management server DSV directly exchange the domain retrieval query and its response through the TLS. However, the domain retrieval query and its response may be stored in the body portion of the SIP message.

Next, the encryption data communication according to the fourth embodiment of the invention will be explained. In the fourth embodiment, the identification information management server ISV retrieves the domain management server DSV.

The network construction of the fourth embodiment is the same as that of the third embodiment described above and explanation will be therefore omitted.

The operation of the fourth embodiment will be explained. The message exchanged among the client CL, the SIP server SIP, the identification information management server ISV and the server SV are those which are based on the SIP message defined in the document 3 and which store information for establishing or cutting off encrypted communication such as encrypted communication setting in the body of the SIP message.

First, the TLS portion 52 such as the server SV1b and the client CL1a executes negotiation with the registrar RG and establishes the TLS session. The SIP message processing portion 53 then registers the location information and the identification information to the location server LSV and the identification information management server ISV, respectively. The detail of this processing is analogous to the one described in the third embodiment and its explanation will be omitted.

Next, explanation will be given on the case where the user of the client CL1a boots up the application program and executes the operation of requesting the communication to the URL "http://www.bbb.com/" of the server SV1b.

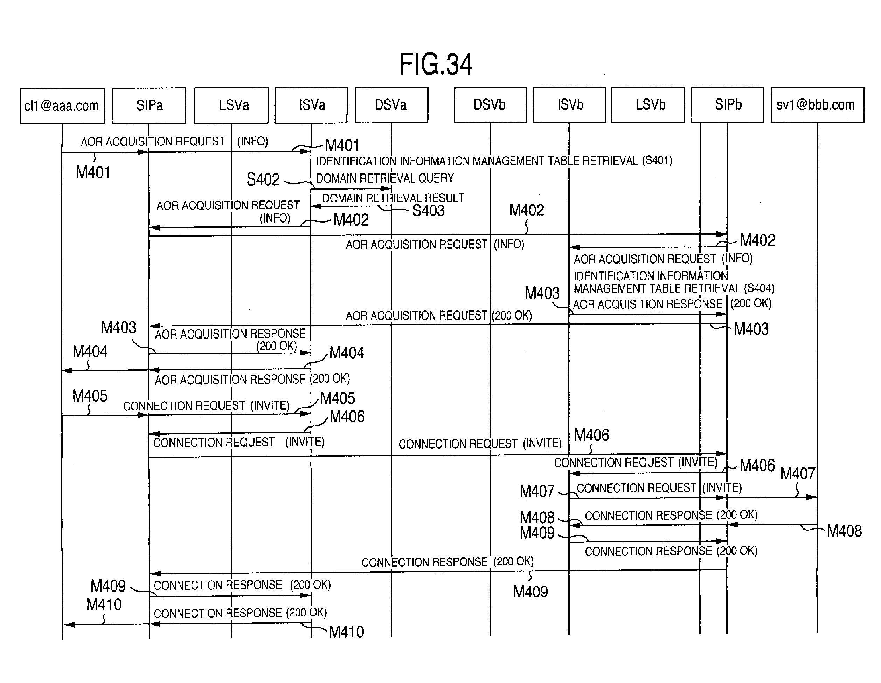

Fig. 34 is a sequence diagram for establishing the encrypted communication when the user of the client CL1a boots up the application program and executes the operation of requesting the communication to the URL "http://www.bbb.com/" of the server SV1b.

When the user of the client CL1a boots up the application program and executes the operation of requesting the communication to the URL "http://www.bbb.com/" of the server SV1b, the encryption function portion 30C of the client CL1a detects this request and asks the encrypted communication control portion 51C to generate the SA information for the communication. The encrypted communication control portion 51C instructs the SIP message processing portion 53C to transmit the AOR acquisition request message (SIP message: INFO) M401 to the identification information management server ISVa through the SIP server SIPa and waits for the response from the identification information management server ISVa.

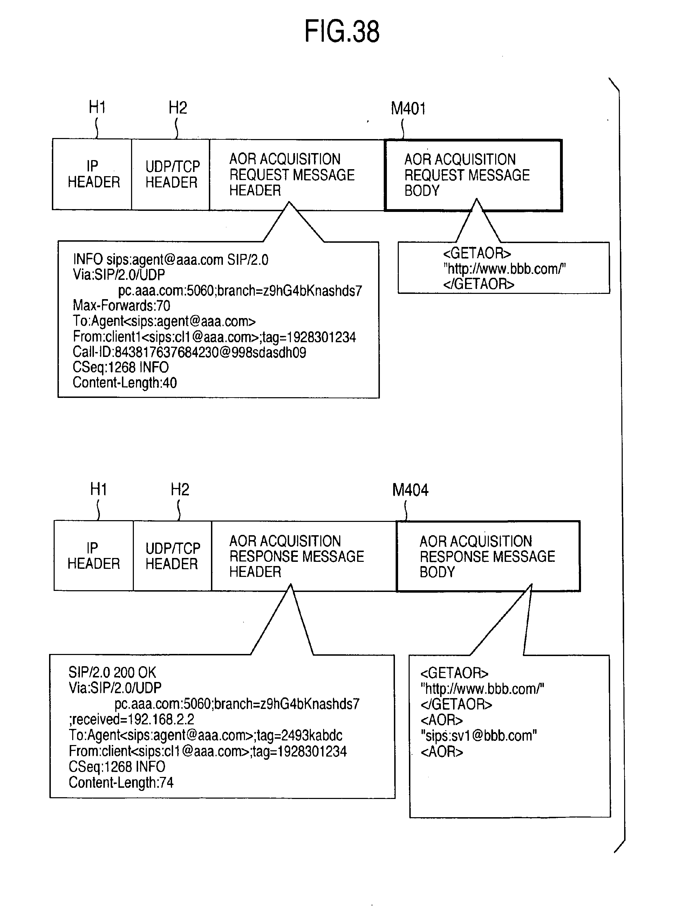

The AOR acquisition request message M401 contains "INFO" representing the SIP message kind and "sips:agent@aaa.com" as the SIP-URI of the identification information management server ISVa in its start line as shown in Fig. 38, for example. The Via header represents the value of FQDN of the client CL1a. The SIP-URI "sips:agent@aaa.com" of the identification information management server ISVa is set to the To header and URI "sips:c11@aaa.com" of the client CL1a is set to the From header. Further, the identification information "http://www.bbb.com/" as the acquisition object of AOR is set to the body portion of the SIP message.

The identification management service 66 of the identification information management server ISVa receiving the AOR acquisition request message M401 confirms whether or not the identification information described in the body portion of the AOR acquisition request message M401, that is, "http://www.bbb.com" is described in the identification information management table 64 (S401).

Here, when the identification information is described in the identification information management table 64, the AOR acquisition request M401 is generated and the AOR acquisition response M404 is transmitted to the client CL1a through the SIP server SIPa. As shown in Fig. 38, the AOR acquisition response message M404 contains "200 OK" representing that the message kind is the response message, in its start line, and the header information having the same content as the AOR acquisition request message M401 is described in the message header portion. The value representing the SIP-URI value "sv1@bbb.com" of the server SV1b retrieved from the identification information management table 64 is described in the body portion.

When the identification information is not described in the identification information management table 64 in S401, on the other hand, the identification information management service 66 transmits the domain retrieval query to the domain management server DSVa by using the identification information described above as a key (S402). The domain management service 67 retrieves the domain management table 68 and returns the retrieval result (S403).

The identification information management service 66 of the identification information management server ISVa that received the retrieval result generates the AOR acquisition request message M402, transmits the AOR acquisition request message M402 to the identification information management server ISV of the management domain contained in the domain retrieval result, that is, the identification information management server ISVb (SIP-URI: agent@bbb.com) through the SIP server SIPa and the SIP server SIPb, and waits for the response from the identification information management server ISVb.

Incidentally, the AOR acquisition request message M40 is the one in which the SIP-URI of the identification information management server ISVa of the start line and the To header of the AOR acquisition request message M401 is changed to SIP-URI "sips:agent@bbb.com" of the identification information management server ISVb and the SIP-URI of the client CL1a of the From header, to SIP-URI "sips:agent@aaa.com" of the identification information management server ISVa.

In the identification information management server ISVb that received the AOR acquisition request message M402, the identification information management service 66 confirms whether or not the identification information described in the body portion of the AOR acquisition request message M401 is described in the identification information management table 64 (S404).

Here, when the identification information is not described in the identification information management table 64, the identification information management server ISVb generates the AOR acquisition response M403 and transmits the AOR acquisition response M403 to the identification information management server ISVa through the SIP server SIPb and the SIP server SIPa.

The AOR acquisition response message M403 contains "200 OK" representing that the message kind is the response message in its start line, and the header information having the same content as the AOR acquisition request message M402 is described in the message header portion. The value representing the SIP-URI value "sv1@bbb.com" of the server SV1b retrieved from the identification information management table 64 is described in the body portion.

Incidentally, when the identification information is not described in the identification information management table 64 in S401, the identification information management server ISVb asks the domain management server DSVb to retrieve the domain by using the identification information as a retrieval key, transmits the AOR acquisition request message to the identification information management server ISV of the management domain contained in the domain retrieval result and waits for the response of the identification information management server ISV.

The identification information management service 66 of the identification information management server ISVa that received the AOR acquisition response M403 generates the AOR acquisition response M404 from the AOR acquisition response M403 and transmits it to the client CL1a through the SIP server SIPa.

After acquiring the SIP-URI of the application server SV1b by receiving the AOR acquisition response message M404, the SIP message processing portion 53 in the client CL1a transmits the connection request message M405 for SV1b to the identification information management server ISVa through the SIP proxy PRa.

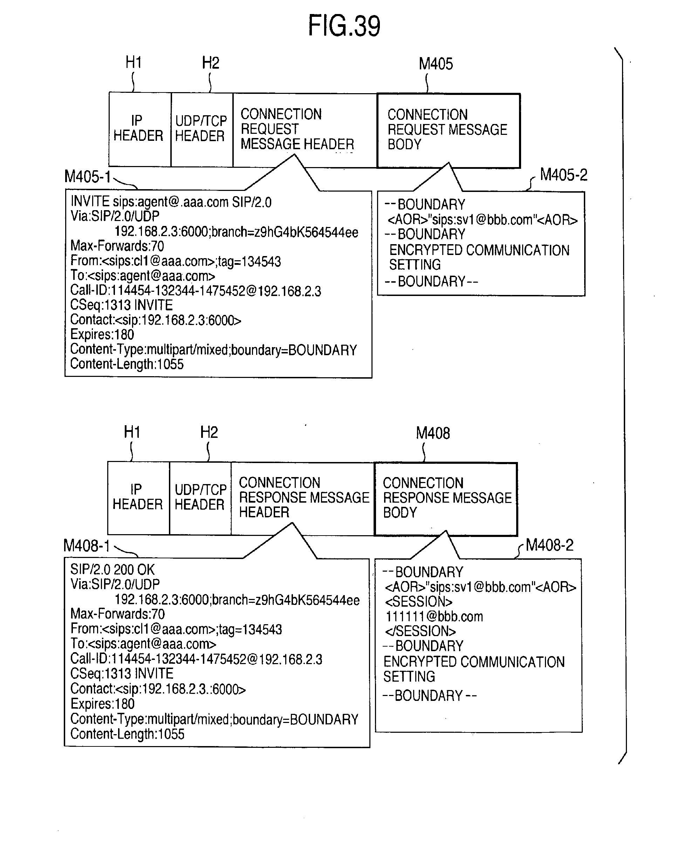

The connection request message M405 includes the header portion 405-1 for the connection request message and the body portion M405-2 as shown in Fig. 39 and the header portion 405-1 of the connection request message has the message kind "INVITE" and the SIP-URI "agent@aaa.com" of the identification information management server ISVa as the destination of the message and as the Request-URI in its start line. The message header portion contains the Via header representing the SIP-URI of the SIP message processing portion 53C in the client CL1a, the To header containing the SIP-URI "agent@aaa.com" of the identification information management server ISVa, the From header containing the SIP-URI "cl1@aaa.com" of the client CL1a, the Content-Type header, the Content-Length header, and other information. The Content-Type header represents the application program with which the body portion M5-2 is related and the Content-Length header represents the length of the body portion M405-2.

The body portion M405-2 of the connection request message M5 is described in the multi-part form defined by MIME. For example, the first part encompassed by "-BOUNDARY" contains the SIP-URI of the server SV1b and the next part contains encrypted communication setting between the client CL1a and the server SV1b. The encrypted communication setting between the client CL1a and the server SV1b contains a proposal payload 91 representing the identification information of the cipher protocol, a transform payload 92 representing transform identification information, a key exchange payload 93, a first ID payload 94 representing the identification information of the requesting party and a second ID payload 95 representing the identification information of the connection destination in the same way as SA setting for ordinary IPsec in IKE shown in Fig. 13, for example.

The identification information management server ISVa that received the connection request message M405 generates the connection request message M406 from the connection request message M405, transmits it to the identification information management server ISVb through the SIP server SIPa and the SIP server SIPb, and waits for the response from the identification information management server ISVb.

Incidentally, the connection request message M406 is the one in which the Request-URI and the To header of the connection request message M405 are changed to the SIP-URI "sips:agent@bbb.com" of the identification information management server ISVb from the SIP-URI of the identification information management server ISVa, and the Via header and the From header are changed to the SIP-URI "sips:agent@aaa.com" of the identification information management server ISVa from the SIP-URI of the client CL1a.

The SIP message processing portion 53I of the identification information management server ISVb that received the connection request message M406 generates the connection request message M407 from the connection request message M406 and transmits it to the application server SV1b through the SIP server SIPb and then waits for the response from the application server SV1b.

The connection request message M407 changes the Request-URI and the To header of the connection request message M406 from SIP-URI of the identification management server ISVb to the application server SV1b "sips:sv1@bbb.com" and the Via header and the From header from the SIP-URI of the identification information management server ISVa to the SIP-URI "sips:agent@bbb.com" of the identification information management server ISV.

The encrypted communication control portion 51S in the server SV1b that received the connection request message M407 by the SIP message processing portion 53S selects one encrypted communication setting described in the connection request message M407. When the encrypted communication setting selected is applied to the encrypted communication function portion 31S, the SIP message processing portion 53S returns the connection response message M408 to the identification information management server ISVb through the SIP server SIPb.

The connection response message M408 includes the header portion M408-1 and the body portion M408-2 as shown in Fig. 39. The header portion M408-1 contains "200 OK" representing that the message is the response message as a message kind, in its start line and header information of a plurality of items in the same way as the connection request message M407 in the message header portion.

The SIP-URI of the server SV1b is described in the first part of the body portion M408-2 while sandwiched between "<AOR>" and "</AOR>" and the session identification information for primarily identifying the encrypted communication session established by the connection response message M408 is further described while sandwiched between "<SESSION>" and "</SESSION>". The next part of the body portion M408-2 contains the encrypted communication setting selected by the server SV1b among the encryption setting proposed by the body portion M407-2 of the connection request message M407.

In the identification information management server ISVb receiving the connection response message M408, the SIP message processing portion 531 generates the connection response message M409 from the connection response message M408 and transmits it to the identification information management server ISVa through the SIP server SIPb and the SIP server SIPa.

Incidentally, the connection response message M409 is the response message for the connection request message M406 and replaces the message header portion continuing from the connection response message M408 by the start line of the header portion M408 to the header information similar to the connection request message M406.

In the identification information management server ISVa receiving the connection response message M409, the SIP processing portion 53I generates the connection response message M410 from the connection response message M409 and transmits it to the client CL1a through the SIP server SIPa.

Incidentally, the connection response message M410 is the response message for the connection request message M405 and replaces the message header portion continuing from the connection response message M409 to the start line of the header portion M409-1 by the header information similar to the connection request message M405.

The client CL1a that received the connection response message M410 applies the encrypted communication setting described in the connection response message M410 to the cipher engine 31C through the encrypted communication control portion 61C and starts application data communication with the application server SL1b.

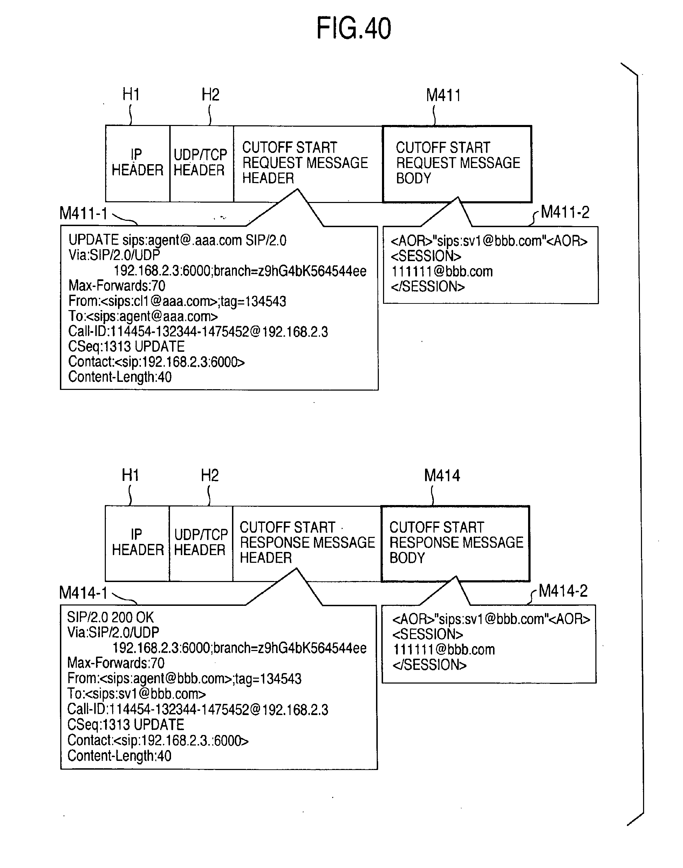

When the encrypted communication control portion 51S of the client CL1a detects completion of the data communication with the server SV1b, the SIP message processing portion 53C transmits the cutoff start request message M411 shown in Fig. 40 to the identification information management server ISVa through the SIP server SIPa and starts the communication cutoff processing.

Incidentally, the termination request message M411 contains the message kind "UPDATE" and the SIP-URI of the identification information management server ISVa in the start line, and Via, To, From, Call-ID, CSec and Route headers in the message header portion in the same way as the connection request message M405. Furthermore, the message body portion contains the SIP-URI of the application server SV1b and session identification information for primarily identifying the encrypted communication session to be cut off.

Incidentally, when the encrypted communication control portion 51S of the server SV1b detects completion of the data communication with the client CL1a, the server SV1b transmits the cutoff start request message M411 to the client CL1a and executes the cutoff processing.

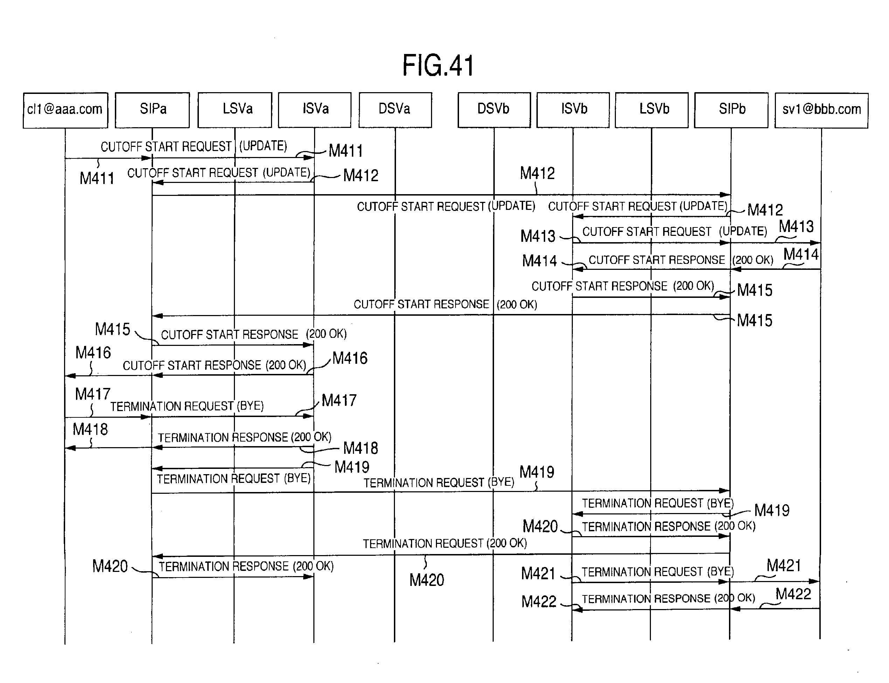

Fig. 41 shows a processing flow of communication cutoff when the data communication is completed between the client CL1a and the server SV1b.

When the identification management server ISVa receives the cutoff start request message M411, the SIP message processing portion 531 generates a cutoff start request message M412 from the cutoff start request message M411 and transmits it to the identification information management server ISVb through the SIP server SIPa and the SIP server SIPb and waits for the response from the identification information management server ISVb.

Incidentally, the cutoff start request message M412 changes the Request-URI and the To header of the cutoff start request message M411 from SIP-URI of the identification management server ISVa to the SIP-URI of the identification information management server ISVb "sips:agent@bbb.com" and the Via header and the From header from the SIP-URI of the client CL1a to "sips:agent@aaa.com" of the SIP-URI of the identification information management server ISVa.

When the identification management server ISVb receives the cutoff start request message M412, the SIP message processing portion 531 generates a cutoff start request message M413 from the cutoff start request message M412, transmits it to the application server SV1b through the SIP server SIPb and waits for the response from the application server SV1b.

Incidentally, the cutoff start request message M413 changes the Request-URI and the To header of the cutoff start request message M412 from SIP-URI of the identification management server ISVb to the SIP-URI of the identification information management server ISVa "sips:sv1@bbb.com" and the Via header and the From header from the SIP-URI of the identification information management server ISVa to "sips:agent@bbb.com" of the SIP-URI of the identification information management server ISVb.

When the server SV1b receives the cutoff start request message M413, the encrypted communication control portion 51S records the start of the cutoff processing and the SIP message processing portion 53S returns the cutoff start response message M414 to the identification information management server ISVb through the SIP server SIPb.

The cutoff start response message M414 has a header portion 414-1 and a body portion M414-2 as shown in Fig. 40. The header portion M414-1 contains "200 OK" representing that the message is the response message as a message kind in its start line and header information of a plurality of items in the same way as the cutoff start request message M413 in the message header portion. The body portion M408-2 contains the same content as that of the body portion 407-2 of the cutoff start request message M407.

In the identification information management server ISVb receiving the cutoff start response message M414, the SIP message processing portion 531 generates the cutoff start response message M415 from the cutoff start response message M414 and transmits it to the identification information management server ISVa through the SIP server SIPb and the SIP server SIPa.

Incidentally, the cutoff start response message M415 is the response message to the cutoff start request message M412 and is generated by replacing the message header portion from the cutoff start response message M414 to the start line of the header portion M414-1 by the header information similar to the cutoff start request message M412.

In the identification information management server ISVa receiving the cutoff start response message M415, the SIP message processing portion 531 generates the cutoff start response message M416 from the cutoff start response message M415 and transmits it to the client CL1a through the SIP server SIPba.

Incidentally, the cutoff start response message M416 is the response message to the cutoff start request message M411 and is generated by replacing the message header portion from the cutoff start response message M415 to the start line of the header portion M415-1 by the header information similar to the cutoff start request message M411.

In the client CL1a receiving the cutoff start response message M416, the SIP message processing portion 53C transmits the termination request message M417 to the identification information management server ISVa through the SIP server SIPa and then waits for the response from the identification information management server ISVa.

The termination request message M417 is analogous to the termination request message M20 and contains the message kind "BYE" and the SIP-URI of the identification information management server ISVa in its start line and Via, To, From, Call-ID, CSec and Route headers in its message header portion in the same way as the cutoff start request message M411 and its message body portion is omitted.

In the identification information management server ISVa receiving the termination request message M417, the SIP message processing portion 531 generates the termination response message M418 and transmits it to the client CL1a through the SIP server SIPa.

The termination request message M418 is analogous to the termination response message M25 and contains "200 OK" representing the response as the message kind in its start line and header information of several items such as Via, To, From, Call-ID, CSec and Route headers extracted from the termination request message M417 in its header portion and its message body portion is omitted.

In the client CL1a receiving the termination response message M418, the encrypted communication control portion 51C instructs the cipher engine 31C to delete encrypted communication setting with the server SV1b from the SADB33C. The cipher engine 31C finishes IPsec encryption/decryption and waits for a new packet transmission request by the same or different application.

In the identification information management server ISVa transmitting the termination response message M418, on the other hand, the SIP message processing portion 53I generates the termination request message M419 from the termination request message M417, transmits the termination request message M419 to the identification information management server ISVb through the SIP server SIPa and the SIP server SIPb and waits for the response from the identification information management server ISVb.

Incidentally, the termination request message M419 is generated by changing the SIP-URI of the identification information management server ISVa of the start line and the To header of the termination request message M417 to the SIP-URI "sips:agent@bbb.com" of the identification information management server ISVb and the SIP-URI of the client CL1a of the Via header and the From header to "sips:agent@aaa.com" of the SIP-URI of the identification information management server ISVa.

When the identification management server ISVb receives the termination request message M419, the SIP message processing portion 53I generates a termination request message M420 and transmits it to the identification information management server ISVa through the SIP server SIPb and the SIP server SIPa.

The termination response message M420 is analogous to the termination response message M25 and contains "200 OK" representing the response as the message kind in its start line and header information of several items such as Via, To, From, Call-ID, CSec, etc extracted from the termination request message M419 in its header portion, and its message body portion is omitted.

Next, when the identification information management server ISVb transmits the termination response message M420, the SIP processing portion 53I generates a termination request message M421 from the termination request message M419, transmits the termination request message M421 to the application server SV1b through the SIP server SIPb and then waits for the response from the application server SV1b.

Incidentally, the termination request message M421 is generated by changing the SIP-URI of the identification information management server ISVb of the start line and the To header of the termination request message M419 to the SIP-URI "sips:sv1@bbb.com" of the application server SV1b and the SIP-URI of the identification information management server ISVa of the Via header and the From header to "sips:agent@bbb.com" of the SIP-URI of the identification information management server ISVb.

In the application server SV1b receiving the termination request message M421, the encrypted communication control portion 51S instructs the cipher engine 31S to delete encrypted communication setting with the client CL1a from the SADB33S. Next, the SIP message processing portion 53S generates a termination response message M422 and transmits it to the identification information management server ISVb through the SIP server SIPb.

The termination response message M422 is analogous to the termination response message M25 and contains "200 OK" representing the response as the message kind in its start line and header information of several items such as Via, To, From, Call-ID, CSec, etc extracted from the termination request message M421 in its message header portion, and its message body portion is omitted.

Next, the control operations of the identification management server ISV and the domain management server DSV in Fig. 34 and the control operations of the identification information management server ISV and the client CL in Fig. 41 will be explained.

The control operation of the SIP servers SIP in Figs. 34 and 41 is similar to the operation of the SIP proxy and registrar disclosed in the document 3 and its explanation will be therefore omitted. Also, the control operation of the server SV in Figs. 34 and 41 is similar to the operation flow of the server SV shown in Figs. 19 and 24 and its explanation will be therefore omitted.

The operation of the client CL in Fig. 34 is similar to the operation flow of the client CL in Figs. 15 and 16 with the exception that the SIP-URI of the identification information management server ISV of the belonging domain is set to Request-URI and To header in place of the SIP-URI of the application server in step 116 and the connection request message describing the SIP-URI of the application server is generated to the body portion of the SIP message. Therefore, explanation will be omitted.

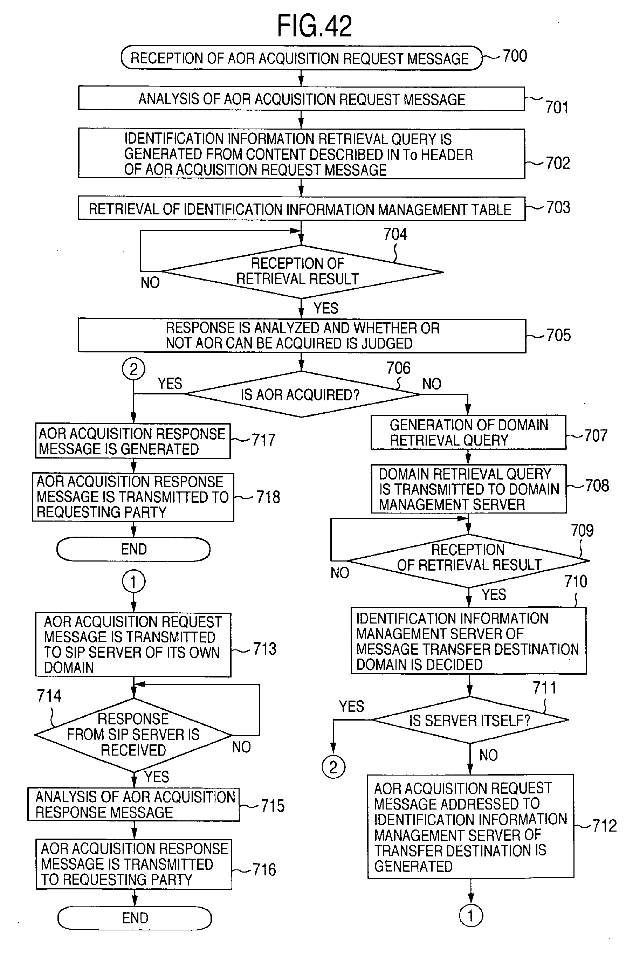

Fig. 42 shows an operation flow when the identification information management server SIPa receives the AOR acquisition request message M402 in Fig. 34.

When the identification information management server SIPa receives the APR acquisition request message M401, the SIP processing portion 530 analyzes the APR acquisition request message M401 and hands over the content described to the To header of the AOR acquisition request message M401 to the identification information management service (step 701).

The identification information management service 66 generates an identification information retrieval query from the description content of the To header (step 702) and instructs the identification information management DB to retrieve the identification information management table 64 (step 703; S401 in Fig. 34).

Next, when receiving the retrieval result from the identification information management DB (step 704), the identification information management service 66 analyzes the retrieval result and confirms whether or not the AOR 62 can be acquired (step 705).

Here, when the AOR 62 can be acquired (YES in 706), the identification information management service 66 hands over the AOR 62 to the SIP message processing portion 53I. Receiving the AOR 62, the SIP message processing portion 53I generates an AOR acquisition response message M404 containing the AOR 62 (step 717), transmits it to the transmitting party of the AOR acquisition request message M401 (step 718) and finishes the processing.

When the AOR 62 cannot be acquired in step 706 (NO in 706), on the other hand, the identification information management service 66 generates a domain retrieval query from the description content of the To header (step 706), transmits it to a domain management server DSVa (step 708; S402 in Fig. 34) and waits for the response from the domain management server DSVa (NO in 709).

When receiving the domain retrieval result from the domain management server DSVa (YES in 709; S403 in Fig. 34), the identification information management service 66 decides the identification information management server ISV as the transfer destination of the message (step 710).

When the identification information management server ISV of the transfer destination is itself (YES at 711), the identification information management service 66 reports the fail of retrieval to the SIP message processing portion 53I. Receiving the report of the fail of retrieval, the SIP message processing portion 53I generates an AOR acquisition response message M404 representing the error occurrence in step 717, transmits this message M404 to the transmitting party of the AOR acquisition request message M40 (step 718) and finishes the processing.

Incidentally, the AOR acquisition response message M404 representing the error occurrence contains "404 NOT FOUND" representing the response as the error message in its start line and header information of several items similar to those of the AOR acquisition request message M401 in the portion continuing the start line. Its body portion is empty.

When the identification information management server ISV of the transfer destination is the identification information management server ISV of other domain (NO at 711), on the other hand, the identification information management service 66 designates the designates the description content of the To header and the SIP-URI of the identification information management server ISV of the transfer destination and requires to acquire the AOR having the description content of the To header.

The SIP message processing portion 531 generates the AOR acquisition request message M402 from the description content of the To header and the SIP-URI of the identification information management server ISV of the transfer destination (step 712), transmits the AOR acquisition request message M402 to the SIP server SIPa (step 713) and waits for the response from the SIP server SIPa (NO at 714).

The SIP message processing portion 53I receives the AOR acquisition response message M403 from the SIP server SIPa (YES at 714), analyzes the AOR acquisition response message M403 and hands over the AOR 62 to the identification information management service 66.

When the AOR acquisition response message M403 is the message representing the error, a null character string is handed over as the AOR62 (step 715).

The identification information management service 66 hands over the AOR 62 to the SIP message processing portion 53I and instructs it to generate the AOR acquisition response message M404 (step 716). The SIP message processing portion 53I generates the AOR acquisition response message M404 containing the AOR62, transmits it to the transmitting party of the AOR acquisition request message M401 (step 717) and finishes the processing.

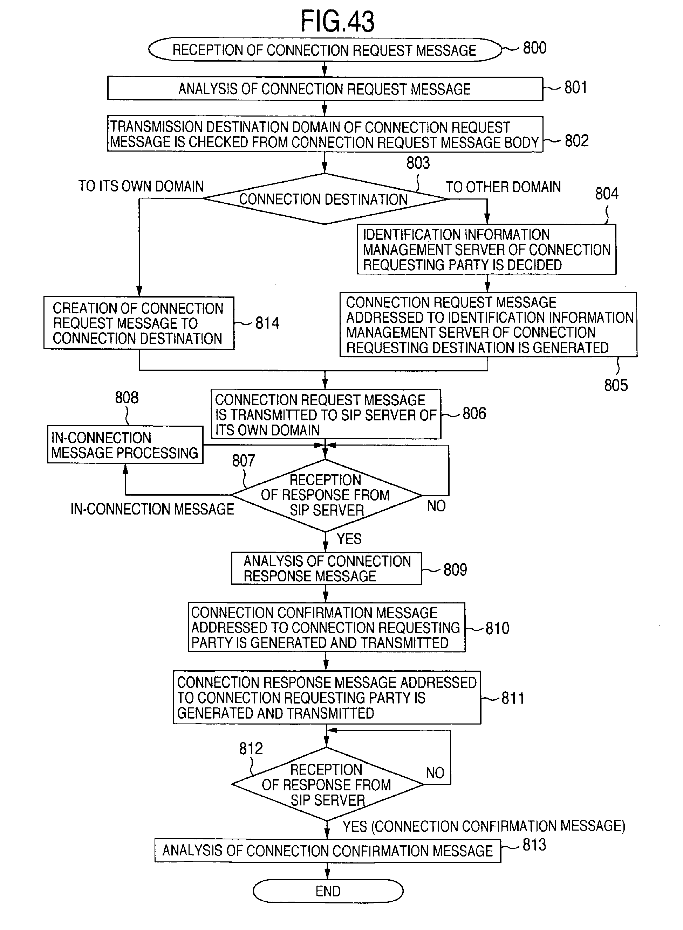

Fig. 43 shows an operation flow when the identification information management server ISVa receives the connection request message M405 in Fig. 34.

Incidentally, the operation is similarly executed in accordance with the same flow when the identification information management server ISVb receives the connection request message M406.

When the identification information management server ISVa receives the connection request message M405, the SIP message processing portion 53I analyzes the connection request message M405 and hands over the body portion of the connection request message M405 to the identification information management service 66 (step 801).

When receiving the body portion of the connection request message M405, the identification information management service 66 confirms the domain of the SIP-URI of the application server SV1b contained in this body portion (step 802).

Here, when the domain of the SIP-URI of the application server SV1b is other domain, the identification information management service 66 decides the identification information management server ISV of the domain to which the application server SV1b belongs, designates the SIP-URI of this identification information management server ISV (ISVb) and the body portion of the connection request message M405 and instructs the SIP message processing portion 53I to transmit the connection request message to the identification information server ISV (ISVb) (step 804).

The SIP message processing portion 53I generates the connection request message M406 from the SIP-URI of the identification information management server ISV (ISVb) and the body portion of the connection request message M405 (step 805), transmits the connection request message M406 to the SIP server SIPa (step 806) and waits for the response from the SIP server SIPa (step 807).

Here, when the busy message is received from the SIP server SIPa, the busy message is processed (step 808) and the flow returns to step 807.

When the connection response message M409 is received from the SIP server SIPa, on the other hand, the SIP message processing portion 53I analyzes the connection response message M409 and hands over the message kind and the body portion of the connection response message M409 to the identification information management service 66 (step 809).

When the SIP message processing portion 53I confirms the message kind of the connection response message M409 and the communication request is accepted, it generates the connection confirmation message and transmits the resulting message to the transmitting party of the connection response message M409 (step 810).

The identification information management service 66 confirms the message kind described above, checks whether or not the communication request is accepted, hands over the message kind and the body portion to the SIP message processing portion 53I and instructs to transmit the connection response message M409 to the transmitting party of the connection request message M401.

The SIP message processing portion 53I generates the connection response message M410 from the message kind and the body portion that are received from the identification information management service 66, transmits the message 410 to the SIP server SIPa (step 811) and waits for the response from the SIP server SIPa (step 812).

When receiving the connection confirmation message from the SIP server SIPa, the SIP message processing portion 53I analyzes the connection confirmation message and hands over the message kind to the identification information management service 66. The identification information management service 66 confirms the connection confirmation message, checks whether or not the communication is established, and then finishes the processing.

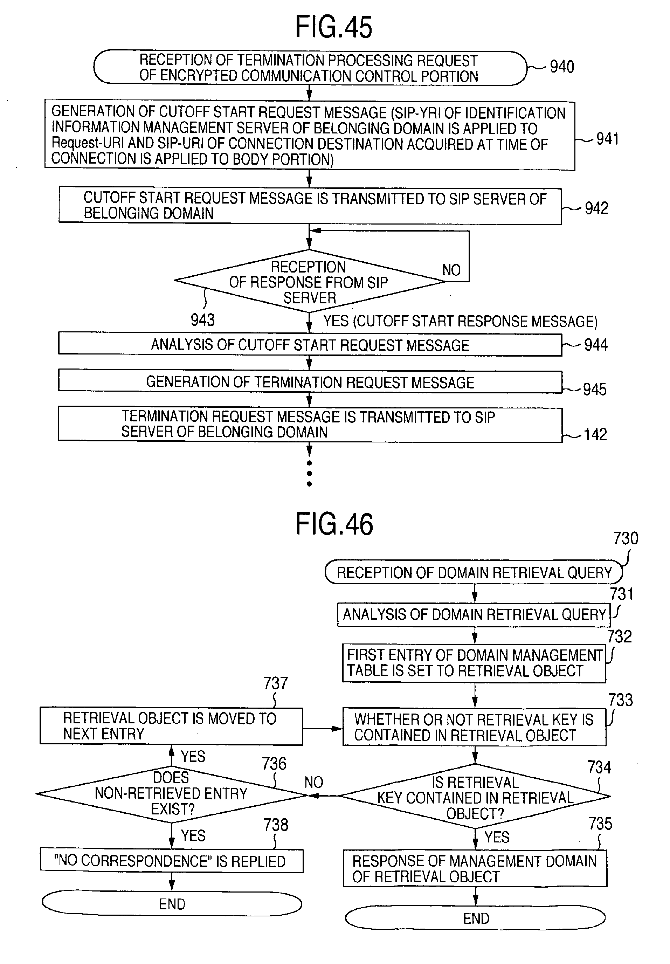

Fig. 46 shows an operation flow of a domain management server DSV when the domain retrieval query is received from the identification information management server ISV.

When the domain management server DSV receives the domain retrieval query from the identification information management server ISV, the domain information management service 67 analyzes the domain retrieval query, takes out the service identification information 65 for retrieving the management domain and sets this information 65 to the retrieval key (step 731).

Next, the domain information management service 67 sets the first entry of the domain management table 68 as the retrieval object entry (step 732) and calculates and evaluates whether or not the retrieval key is contained in the service identification information 65 of this entry (step 733).

Here, when the retrieval key is judged as being contained (YES at step 734), a domain retrieval response containing the management domain 69 as the retrieval object entry is generated and is transmitted to the requesting party (step 735), and the processing is completed.

On the other hand, when the retrieval key is not judged as being contained (NO at step 734), whether or not the entries that have not yet been retrieved exist in the domain management table 68 is checked (step 736). When the entries not yet retrieved remain, the next entry is set as the retrieval object entry (step 737) and the processing after step 733 is repeated.

When the entry not yet retrieved does not exist, on the other hand, a domain retrieval response containing the error message to the effect that the corresponding management domain does not exist is generated and is transmitted to the requesting party (step 738) and the processing is finished.

In the domain management table 68 shown in Fig. 33, however, the normal expression "*" meaning arbitrary service identification information 65 is described in the last entry (DEN-9). Therefore, whichever service identification information 65 may be set as the retrieval key, the corresponding management domain never fails to respond.

Fig. 45 shows an operation flow when the SIP message processing portion 53C of the client CL1a receives the termination processing request from the encrypted communication control portion 51C.

When receiving the termination processing request from the encrypted communication control portion 51C, the SIP message processing portion 53C of the client CL1a applies the SIP-URI of the identification information management server ISV (identification information management server ISVa) of the belonging domain to Request-URI and the SIP-URI of the connection destination acquired at the time of connection to the body portion and generates the cutoff start request message M411 (step 941).

After transmitting the cutoff start request message M411 to the SIP server (SIP server SIPa) of its own domain, the SIP message processing portion 53C waits for the response from the SIP server (step 943).

When receiving the connection start response message M416 from the SUP server, the SIP message processing portion 53C analyzes the cutoff start response message (step 944), applies the SIP URI of the identification information management server ISV (identification information management server ISVa) of the belonging domain to Request-URI and the SIP-URI of the connection destination acquired at the time of connection to the body portion and generates the termination request message M417 (step 945).

After the termination request message M417 is generated, the processing after step 142 shown in Fig. 22 is executed.

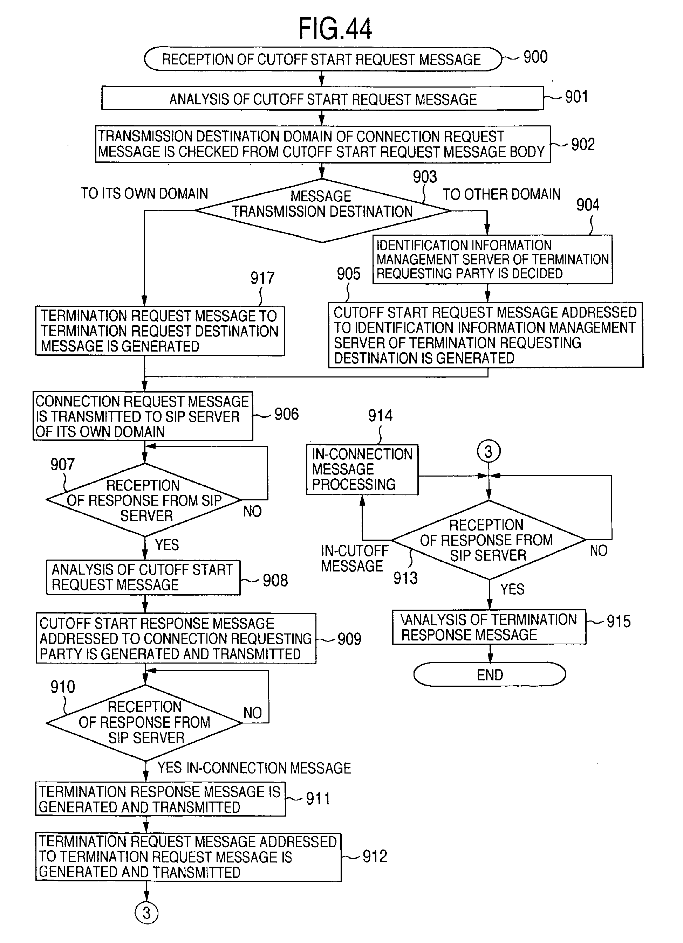

Fig. 44 shows an operation flow when the identification information management server ISVa receives the cutoff start request message M411. Incidentally, the operation is executed in accordance with the same flow when the identification information management server ISVb receives the connection request message M412, too.

When the identification information management server ISVa receives the cutoff start request message M411, the SIP message processing portion 53I analyzes the cutoff start request message and hands over the body portion of the cutoff start request message M411 to the identification information management service 66 (step 901).

When receiving the body portion of the cutoff start request message M411, the identification information management service 66 confirms the SIP-URI of the cutoff destination server and the session identification information contained in the body portion and checks the transmission destination domain of the cutoff start request message (step 902).

Here, when the transmission destination domain is other domain, the identification information management service 66 designates the body portion described above and instructs the SIP message processing portion 53I to transmit the cutoff start request message addressed to the identification information management server ISV to the transmission destination domain (step 904).

The SIP message processing portion 53I generates a cutoff start request message M412 containing the body portion received from the identification information management service 66 (step 905), transmits the cutoff start request message M412 to the SIP server SIPa (step 906) and waits for the response (step 907).

When receiving the cutoff start response message M415 from the SIP server SIPa, the SIP message processing portion 53I analyzes the cutoff start response message M415 and hands over the message kind and the body portion to the identification information management service 66 (step 908).

The identification information management service 66 confirms the message kind and whether or not the cutoff start request is accepted, hands over the message kind and the body portion to the SIP message processing portion 53I and instructs it to generate and transmit the cutoff start response message M416 (step 909).

The SIP message processing portion 531 transmits the cutoff start response message 416 to the SIP server SIPa and waits for the response (step 910).

When receiving the termination request message M417 from the SIP server SIPa, the SIP message processing portion 53I transmits the termination response message M418 to the transmitting party of the termination request message M417 (step 911) and reports the receipt of the termination request message M417 to the identification information management service 66. The identification information management service 66 instructs the SIP message processing portion 53I to generate and transmit the termination request message M418 (step 912).

The SIP message processing portion 53I transmits the termination request message M419 to the SIP server SIPa and waits for the response (step 913).

When receiving the in-cutoff message, the SIP message processing portion 53I processes this message and returns to step 913.

When receiving the termination response message M420, on the other hand, the SIP message processing portion 53I analyzes the termination response message M420 and reports the message kind to the identification information management service 66. The identification information management message 66 confirms the message kind and whether or not the cutoff processing is normally finished (step 914), and finishes the processing.

Incidentally, when the transmission destination of the cutoff start request message M411 is judged as being its own domain in step 903, the identification information management service 66 designates the body portion of the cutoff start request message M411 and instructs the SIP message processing portion 53I to generate and transmit the cutoff start request message to the SIP-URI of the cutoff destination server (step 917).

The SIP message processing portion 53I transmits the cutoff start request message so generated to the SIP server SIPa and executes the processing after step 906.

The above explains the control operations of the identification information management server ISV and the domain management server DSV in Fig. 34 and the identification information management server ISV and the client CL in Fig. 41.

In the fourth embodiment, the client CL transmits the AOR acquisition request message to the identification information management server ISV belonging to the same domain as the client CL. The identification information management server ISV that received the AOR acquisition request message retrieves the identification information management table 64, and when the corresponding entry does not exist, retrieves the domain management server DSV and decides the identification information management server ISV to which the AOR acquisition request message is to be transmitted.

It is therefore possible to dispersedly manage the service identifiers of the clients CL and the servers SV by the identification information management server ISV. The SIP server needs to have the message transfer function of deciding the transmission destination of the SIP message in accordance with the header information of the SIP message that is received. For this reason, ordinary SIP servers can be used.

Because the SIP-URI is allocated to the identification information management server ISV, the message transfer function of the SIP server SIP can be utilized when the client CL or the sever SV or other identification information management server ISV transmits the SIP message to a certain identification information management server ISV.

In the fourth embodiment, because the connection request message to be transmitted is generated on the basis of the content of the body portion of the connection request message received by the identification information management server ISV, the SIP-URI of the client CL is not described in the connection request message received by the application server SV. Therefore, encrypted communication can be conducted without laying the SIP-URI of the client CL open to the public while insuring that the client CL is authenticated to the SIP server.

The present invention is not limited to the construction of the fourth embodiment but may be constituted in the following way.

For example, the identification information management server ISV transmits the termination request message to other identification information management server ISV and the application server SV upon the reception of the termination request message. However, it may transmit the termination request message upon reception of the termination response message.

The identification information management server ISV retrieves the identification information management table 64 and makes a query to the domain management server DSV when the retrieval fails. However, the identification information management server ISV may inquire the domain management server DSV and may then retrieve the identification information management table 64 when the domain is judged as its own domain or these operations may be executed in parallel.

The identification information management server ISV confirms the domain name of the body of the connection request message received and decides the transmission destination. However, the identification information management server ISV may first judge whether or not the connection request message is allowed to be transmitted and may then transmit the connection request message that is generated afresh to the transmission destination when the transmission is judged as being permissible.

Information on the authority of the connection destination and information on the connection policy may be described in the AOR acquisition request message or the connection request message to make access judgment in the identification information management server ISV.

The identification information management server ISV holds the identification information management table 64. However, it is also possible to install a database apparatus for holding the identification information management table 64 so that the identification information management server ISV can gain access to the table through the network.

In the present invention, the identification information management server ISV transmits and receives the SIP message from the connection request message to the termination response message for starting and finishing the encrypted communication. However, it is also possible to arrange a new server for transmitting and receiving the SIP message.

In the fourth embodiment, one management domain includes one SIP server SOP and one identification information management server ISV but the invention is not limited to this construction.

For example, it is possible to divide the SIP server SIP into an SIP server SIP for transmitting and receiving the SIP message between the client CL and the server SV and an SIP server SIP for transmitting and receiving an SIP message with the SIP servers of other management domains so that the identification information management server ISV can change the SIP server as the transmission destination of the SIP message depending on the transmission destination of the SIP message.

A load concentration on the SIP server SIP can be prevented in this way. It is further possible to constitute one management domain by a plurality of SIP servers SIP and a plurality of identification information management servers ISV and to change the transmission destination of the SIP message in accordance with the load of the identification information management server ISV.

In the fourth embodiment, the encrypted communication function portion encrypts the communication between the application of the client CL and the application of the server SV by IPsec but the invention is not limited thereto and various encrypted communication protocols can be applied.

For example, encryption may be achieved by using TLS in place of IPsec. When encryption is made by using TLS, encrypted communication setting includes connection information established by a TLS Handshake protocol. In other words, the encrypted communication setting includes a session identifier for identifying the connection information, an IP address and its port number of the communication peer, an IP address and its port number used for communication with the communication peer, an encryption algorithm for encrypting application data, a message authentication algorithm for authenticating application data, a master secret for calculating a key used for encryption and message authentication, and so forth.

The client CL applies the encrypted communication setting described above to the cipher engine d31C, establishes the TLS session with the application server SL1 and starts application data communication. To establish at this time the TLS session between the client CL and the server SV, a Session Resume function prescribed by RFC2246 can be used. In other words, the encrypted communication function portion 30C in the client CL transmits a Client Hello message containing a session identifier of the encrypted communication setting to the application server SV and reports the encrypted communication setting used for the application data communication to the encrypted communication function portion 30S of the application server SV.

When receiving the Client Hello message, the encrypted communication function portion 30S of the application server SV retrieves the SADB, confirms the existence of the encrypted communication setting corresponding to the session identifier and transmits the Server Hello message containing the session identifier to the client CL. When receiving the Server Hello message, the encrypted communication function portion 30C of the client CL confirms that the session identifier containing the Server Hello message is contained in the Server Hello message, judges that the TLS session is established and starts the application data communication.

Incidentally, the foregoing embodiments may be executed by appropriately combining them together.

The specification and drawings are, accordingly, to be regarded in an illustrative rather than a restrictive sense. It will, however, be evident that various modifications and changes may be made thereto without departing from the spirit and scope of the invention as set forth in the claims.

## Claims

1. A data communication method between a client (CL) and an application server (SV) in a communication system including a communication network (NW) having a plurality of domains (69), management servers (DSV) for managing respective domains (69), and clients (CL) and service servers (SV) connected to mutually different domains (69), comprising:
a first step in which a client (CL) designates a service identifier (62) and inquires an address-of-record (AOR) of the application server (SV) to which the service identifier (62) is allocated which the address-of-record (AOR) contains a belonging domain name, to a first management server (DSV) managing the domain to which the client (CL) belongs;
a second step in which the first management server (DSV) receiving the query from the client (CL) acquires the belonging domain name of the application server (SV) from the domain management table (68) managing a mapping between the service identifier (62) and its belonging domain (69), designates a service identifier (62) of the application server (SV) to a second management server (DSV) managing the belonging domain (69) and inquires an address-of-record (AOR) allocated to the application server (SV) and containing the belonging domain name of the application server (SV);
a third step in which the second management server (DSV) acquires an address-of-record corresponding to the service identifier (AOR) of the application server (SV) from an identification information management table (64) managing a mapping between the service identifier (62) and the address-of-record (AOR), and reporting the address-of-record (AOR) to the client (CL);
a fourth step in which the client (CL) transmits a connection request message (M5) containing the address-of-record (AOR) of the application server (SV) acquired to the first management server (DSV); and
a fifth step in which the first management server (DSV) judges a transmission destination of the connection request message (M5) received on the basis of the domain name contained in the address-of-record (SV) described in the connection request message received, and transfers the connection request message (M5) to the application server or the second management server (DSV) managing the belonging domain of the application server (SV).

2. The data communication method as defined in claim 1, wherein the first management server is a session management server (PR) managing a communication session of the domain (69) to which the client (CL) belongs, and the second management server (DSV) accepting the query from the first management server (DSV) is a session management server (PR) managing a communication session of the domain (69) to which the application server (SV) belongs.

3. The data communication method as defined in claim 1, wherein the first management server is an identification information management server (ISV) managing identification information of the domain to which the client belongs, and the second management server accepting the query from the first management server is an identification information management server (ISV) managing identification information of the domain (69) to which the application server belongs.

4. The data communication method as defined in claim 1, which further comprises:
a sixth step in which the application server (SV) returns a connection response message (M10) containing parameter information necessary for encrypted communication to the requesting client (CL) through the management server (DSL) in response to the reception of the connection request message; and
a seventh step in which a message encrypted in accordance with the parameter information designated by the connection response message (M11) is communicated between the client (CL) and the application server (SV).

5. The data communication method as defined in claim 2, wherein the session management server (PR) comprises an SIP (Session Initiation Protocol) server, a communication message between the client and the session management server is encrypted, and the service identifier (AOR) is an IP address of the application server (SV).

6. The data communication method as defined in claim 5, wherein communication data between the client (CL) and the application server (SV) is encrypted.

7. A management server DSV for communicating with clients (CL) and servers (SV) and managing respective domains (69) in a communication network (NW) including a plurality of domains (69), comprising:
a domain management table (68) for managing a correspondence relation between a service identifier (62) and its belonging domain (69);
the management server (DSV) acquiring a belonging domain name of an application server (SV) from the domain management table (68) when receiving from the client (CL) a query of an address-of-record (AOR) containing a belonging domain name of the application server to which the service identifier (62) is allocated, by designating a service identifier (62); inquiring an address-of-record (AOR) containing a belonging domain name of the application server (SV) allocated to the application server to other management server (DSV) by designating a service identifier (AOR) of the application server (SV); acquiring the address-of-record of the application server (SV) inquired, from other management server; reporting the address-of-record (AOR) acquired to the client (CL), judging a transmission destination of the connection request message (M5) received on a basis of the domain name contained in the address-of-record (AOR) described in the connection request message received when receiving the connection request message containing the address-of-record of the application server (SV) reported; and transferring the connection request message (M10) to the application server or other management server (DSV) managing the belonging domain of the application server (SV).
